# EUROPÄISCHE PATENTSCHRIFT

(11) **EP 4 129 939 B1**
(45) Veröffentlichungstag und Bekanntmachung des Hinweises auf die Patenterteilung: **10.06.2026**
(21) Anmeldenummer: 21189393.8
(22) Anmeldetag: 03.08.2021
(51) Int. Cl.: C03B 37/012, C03B 37/027

(54) **VERFAHREN UND HALBZEUG ZUR HERSTELLUNG VON MEHRKERNFASERN**
METHOD AND SEMI-FINISHED PRODUCT FOR MANUFACTURING MULTI-CORE FIBRES
PROCÉDÉ ET PRODUIT INTERMÉDIARE DESTINÉS À LA FABRICATION DE FIBRES À COEURS MULTIPLES

(43) Veröffentlichungstag der Anmeldung: 08.02.2023
(73) Patentinhaber: Heraeus Quarzglas GmbH & Co. KG, 63450 Hanau (DE)
(72) Erfinder: LORENZ, Michael, 63450 Hanau (DE)
(74) Vertreter: Gille Hrabal Partnerschaftsgesellschaft mbB Patentanwälte

(56) Entgegenhaltungen:
- JP-A- 2015 151 279
- JP-A- 2018 052 775
- JP-A- 2019 104 653
- JP-B2- 5 941 430

## Beschreibung

### Technisches Gebiet

Die vorliegende Erfindung betrifft ein Verfahren zur Herstellung einer Mehrkernfaser, umfassend die folgenden Verfahrensschritte:
(a) Bereitstellen eines langgestreckten, ein Glas-Mantelmaterial enthaltenden zylinderförmigen Basiskörpers, der ein erstes Ende, ein zweites Ende, eine Basiskörper-Längsachse, eine Basiskörper-Mantelfläche, einen radialen Basiskörper-Querschnitt, einen nominalen Basiskörper-Außendurchmesser und mindestens zwei Durchgangslöcher aufweist, die sich entlang der Basiskörper-Längsachse durch den Basiskörper erstrecken,
(b) Einbringen eines ein Glas-Kernmaterial enthaltenden Kernstabs in die mindestens zwei Durchgangslöcher unter Bildung eines Bauteil-Ensembles, in dem die Kernstäbe innerhalb eines Lochbereich-Umkreises um die Basiskörper-Längsachse über den radialen Basiskörper-Querschnitt verteilt sind,
(c) Ziehen des Bauteil-Ensembles zu der Mehrkernfaser oder Weiterarbeitung des Bauteil-Ensembles zu einer Vorform, aus der die Mehrkernfaser gezogen wird, wobei das Bauteil-Ensemble mittels eines Halters aus Glas gehalten wird, der im Bereich des ersten Endes mit dem Basiskörper unter Ausbildung einer Schweißkontaktfläche verschweißt ist,
wobei ein Halter mit einem langgestreckten Hohlteil eingesetzt wird, das einen Hohlkanal mit einer Innenkontur aufweist, die größer ist als ein Lochbereich-Umkreis, innerhalb dem die Durchgangslöcher vollständig oder mit mindestens 90% ihres Loch-Durchmessers liegen, und das eine radiale Außenabmessung aufweist, die größer ist als der Basiskörper-Außendurchmesser.

Außerdem betrifft die Erfindung ein Halbzeug zur Herstellung einer Mehrkernfaser, umfassend:
(i) einen ein Glas-Mantelmaterial enthaltenden zylinderförmigen Basiskörper, der ein erstes Ende, ein zweites Ende, eine Basiskörper-Längsachse, eine Basiskörper-Mantelfläche, einen radialen Basiskörper-Querschnitt und einen nominalen Basiskörper-Außendurchmesser aufweist,
(ii) mindestens zwei über den Basiskörper-Querschnitt verteilte Durchgangslöcher zur Aufnahme von Kernstäben, die jeweils einen Loch-Durchmesser aufweisen, und die sich durch den Basiskörper entlang der Basiskörper-Längsachse erstrecken, und
(iii) einen Halter aus Glas, der im Bereich des ersten Endes mit dem Basiskörper unter Ausbildung einer Schweißkontaktfläche verbunden ist,
wobei der Halter ein langgestrecktes Hohlteil umfasst, das eine radiale Außenabmessung aufweist, die größer ist als der Basiskörper-Außendurchmesser und das eine Innenabmessung aufweist, die größer ist als ein Lochbereich-Umkreis, innerhalb dem die Durchgangslöcher vollständig oder mit mindestens 90% ihres Loch-Durchmessers liegen.

Bei Mehrkernfasern sind mehrere Lichtwellen leitende, optische Kernbereiche in einer gemeinsamen Faser integriert. Die optischen Kernbereiche sind von Mantelmaterial umgeben und erstrecken sich entlang der Faserlängsachse. Dieses Faser-Design verspricht eine hohe Kapazität der Signalübertragung, indem durch räumliche Multiplexmethoden mehrere Signale zusammengefasst und simultan in jedem der Kernbereiche übertragen werden.

### Stand der Technik

Zur Herstellung von Multikernfasern wird beispielsweise das sogenannte "Stack-and-Draw-Verfahren" eingesetzt. Dabei werden Kernstäbe und Quarzglas-Zylinder unterschiedlicher Durchmesser so zusammengestapelt, dass sie eine relativ hohe Packungsdichte und eine gewisse Symmetrie aufweisen. Die zylinderförmigen Bauteile werden in ein Hüllrohr eingeführt und darin räumlich fixiert. Dieses Ensemble wird zu der Mehrkernfaser gezogen oder es wird vorab zu einer Vorform elongiert, aus der anschließend die Mehrkernfaser gezogen wird.

Das "Stack-and-Draw-Verfahren" erfordert einen hohen Justageaufwand und es führt leicht zu Maßhaltigkeitsfehlern. Wegen Unterschieden in der radialen Packungsdichte weist die elongierte Vorform häufig unterschiedliche Radiuswerte in azimutaler Richtung auf, die durch Rundschleifen ausgeglichen werden müssen.

Diese Nachteile vermeidet eine in der JP 2018-052775 A und in der JP 2014-201494 A beschriebene Verfahrensweise zur Herstellung einer Mehrkernfaser. Dabei wird ein Basiskörper in Form eines Zylinders aus einem Mantelmaterial eingesetzt, der von mehreren Durchgangslöchern durchzogen ist, die in Richtung der Zylinderlängsachse verlaufen. In die Durchgangslöcher, die beispielsweise durch Längsperforation des Basiskörpers erzeugt werden, wird jeweils ein Kernstab eingesetzt, der ein Kernmaterial enthält. Zwischen den Kernstäben und den Innenwandungen des Basiskörpers verbleibt herstellungsbedingt ein gewisser Ringspalt.

Das Ensemble aus Basiskörper und Kernstäben wird zu der Mehrkernfaser gezogen, oder es wird zu einer sekundären Vorform weiterverarbeitet, aus der anschließend die Mehrkernfaser gezogen wird. Bei diesem Elongier- oder Ziehprozess kollabiert der Ringspalt und die Bauteile des Ensembles werden miteinander verschmolzen. Um den Einschluss von Gas zu vermeiden, wird am Ringspalt ein Unterdruck angelegt und das Spaltvolumen evakuiert. Zum Evakuieren des Spaltvolumens wird am oberen stirnseitigen Ende des Basiskörpers ein im Wesentlichen zylinderförmiger Ansaugstutzen aus Glas angeschweißt, der gleichzeitig zur Halterung des Ensembles beim Elongierprozess dienen kann, und der im Folgenden auch als "Halter" bezeichnet wird. Der Halter wird in der Aufnahme einer Halterung einer Elongier-Vorrichtung fixiert, beispielsweise im Spannfutter eines Ziehturms.

Die JP 5 941430 B2 beschreibt ein Verfahren zur Herstellung einer Mehrkernfaser. Als Halbzeug wird eine Vorform aus porösem Glas eingesetzt, die sieben Durchgangslöcher zur Aufnahme von Kernstäben hat. Zum Verglasen wird seitlich am oberen Mantelbereich der Vorform ein Halter angeschweißt. Der Halter weist ein Hohlteil auf, dessen Außendurchmesser größer ist als der Außendurchmesser der porösen Vorform und dessen Innendurchmesser genauso groß ist wie der Außendurchmesser der Vorform.

Aus der JP 2019 104653 A ist ein weiteres Verfahren zur Herstellung einer Mehrkernfaser bekannt. Ein Bauteil-Ensemble aus Basiskörper mit mehreren Durchgangslöchern und darin eingesetzten Kernstäben wird mittels eines Halters aus Glas gehalten. Der Halter ist mit dem Basiskörper unter Ausbildung einer Schweißkontaktfläche verbunden. Der Halter umfasst ein langgestrecktes Hohlteil, das eine Innenkontur aufweist, die größer ist als ein Lochbereich-Umkreis, innerhalb dem die Durchgangslöcher vollständig liegen.

Die JP 2015 151279 A offenbart ein ähnliches Verfahren zur Herstellung einer Mehrkernfaser mit einem Verglasungsschritt, bei dem eine Vorform mittels angeschweißtem Halter gehalten wird. Es wird eine angeschrägte Schweißkontaktfläche an der Mantelfläche der Vorform offenbart.

### Technische Aufgabe

Zur Verringerung der Herstellungskosten werden möglichst großvolumige Basiskörper verarbeitet, die mit vielen Durchgangslöchern durchzogen sind, von denen einige weit von der Zylinder-Längsachse entfernt und nahe an der Zylinder-Mantelfläche verlaufen können. Je größer das Volumen des Basiskörpers ist, umso größer ist dessen Gewicht und umso stabiler muss die Verbindung zwischen dem Basiskörper und dem Halter sein.

Aufgrund des Zylindergewichts von beispielsweise bis zu 200 kg muss der Halter eine ausreichend große Verbindungsfläche zum Basiskörper - haben, um ein Versagen während der Handhabung zu vermeiden. Neben der mechanischen Beanspruchung durch das Gewicht des Basiskörpers unterliegt die Verbindungsfläche auch einer thermisch induzierten Zugbeanspruchung, die in Kombination mit dem Zylinder-Gewicht leicht über 1 MPa betragen kann.

Die Stabilität dieser Verbindung kann durch den Einsatz dickwandiger Halter erhöht werden, wenn dadurch die Größe der Verbindungsfläche zwischen dem Basiskörper und dem Halter erhöht wird. Andererseits ist der Halter-Durchmesser häufig durch eine maximale Aufnahmeweite der Halterung begrenzt, und der angeschweißte Halter darf auch nicht so dickwandig sein, dass er die Durchgangslöcher blockiert, weil dann ein effektives Evakuieren des Ringspalts nicht mehr möglich wäre.

Bei der JP 2018-052775 A wird dieses Problem dadurch gelöst, dass zwischen dem Basiskörper und dem Halter ein ringförmiges Zwischenstück mit zentraler Öffnung eingeschweißt wird, die über Kanäle fluidisch mit allen Durchgangslöchern verbunden ist.

In der JP 2014-201494 A wird vorgeschlagen, einen Halter einzusetzen, der über seine Länge aus mehreren hohlzylinderförmigen Dummy-Teilstücken zusammengesetzt ist, deren Innendurchmesser und Außendurchmesser sich von unten nach oben verringen.

Bei diesen beiden Lösungen ist der minimale Innendurchmesser des Halters kleiner als der Umkreis im Basiskörper-Querschnitt, innerhalb dem die Kernstäbe beziehungsweise die Öffnungen der Durchgangslöcher liegen. Dies hat zur Folge, dass der Halter - in einer Projektion auf den Basiskörper-Querschnitt - Durchgangslöcher vollständig oder teilweise überdeckt, so dass die Bestückung des Basiskörpers mit den Kernstäben von oben durch die zentrale Halter-Öffnung nicht möglich ist. Dies hat zur Folge, dass die Bestückung mit den Kernstäben entweder vom gegenüberliegenden Basiskörper-Ende erfolgen muss, oder zeitlich vor dem Anschweißen des Zwischenstücks beziehungsweise des Halters erfolgt sein muss.

Beide Verfahrensvarianten haben Nachteile. Die zuerst genannte Variante erschwert das Handling, und bei der zuletzt genannten Variante können durch den Hitzeeintrag beim anschließenden Anschweißen des Halters die in den Durchgangslöchern eingesetzten Kernstäbe beschädigt werden. Beispielsweise können die Kernstäbe verformt werden, insbesondere wenn sie ein Glas enthalten, das eine geringere Viskosität aufweist als das Glas des Basiskörpers, was regelmäßig der Fall ist. Oder auf den Kernstäben können sich Sublimationsprodukte niederschlagen, die zu einer Verschlechterung der Lichtleitung der Mehrkernfaser führen können.

Auch wenn in den Durchgangslöchern noch kein Kernstab eingesetzt ist, kann die hohe Temperatur beim Schweißvorgang zu einer Verformung, insbesondere einer Verengung der Durchgangslöcher führen, was das nachfolgende Bestücken mit den Kernstäben erschwert. Dies trifft insbesondere für Durchgangslöcher zu, die in der Nähe der Schweißnaht liegen, oder von dieser sogar bedeckt sind.

Der Erfindung liegt daher die Aufgabe zugrunde, ein Verfahren zur Herstellung von Mehrkernfasern anzugeben, bei dem die Bestückung des Basiskörpers mit Kernstäben nicht durch das Layout des Halters begrenzt ist, und das insbesondere eine Bestückung mit allen Kernstäben von oben auch noch nach dem Anschweißen des Halters ermöglicht.

Außerdem liegt der Erfindung die Aufgabe zugrunde ein zur Durchführung des Verfahrens geeignetes Halbzeug bereitzustellen.

### Allgemeine Beschreibung der Erfindung

Hinsichtlich des Verfahrens wird diese Aufgabe ausgehend von dem eingangs genannten Verfahren erfindungsgemäß dadurch gelöst,
dass die Schweißkontaktfläche sowohl an der Basiskörper-Mantelfläche als auch an einer ersten, oberen Basiskörper-Stirnseite erzeugt wird,
und/oder dass ein Adapterteil eingesetzt wird, das im Bereich des ersten Endes mit dem Basiskörper verbunden wird, und das eine radiale Außenabmessung aufweist, die größer ist als der Basiskörper-Außendurchmesser, wobei das Adapterteil mit dem hohlzylinderförmigen Hohlteil verschweißt wird. oder dadurch dass ein Basiskörper mit einem sich konisch nach oben erweiternden ersten Ende eingesetzt wird, das beim Rundschleifen der Basiskörper-Mantelfläche zur Einstellung des nominalen Außendurchmessers erzeugt wird, indem dort kein oder weniger Glasmaterial abgetragen wird, wobei der Hohlzylinder mit dem verdickten ersten Ende so verschweißt wird, dass die jeweiligen Längsachsen koaxial verlaufen.

Das erste Ende des Basiskörpers wird im Folgenden auch als "oberes Ende" und das gegenüberliegende, zweite Ende wird auch als "unteres Ende" bezeichnet. Die Lokaladverbien bezeichnen die Position der jeweiligen Enden beim Faserziehprozess mit vertikal orientierter Basiskörper-Längsachse. Dem ersten, oberen Ende ist eine erste, obere Basiskörper-Stirnseite zugeordnet.

Der langgestreckte Basiskörper ist im Wesentlichen zylinderförmig und er hat einen kreisrunden Querschnitt. Am oberen und/oder am unteren Ende kann er eine Verdickung oder eine Verjüngung aufweisen. Der Basiskörper-Außendurchmesser wird am zylinderförmigen Längenabschnitt zwischen den Enden ermittelt.

Das Hohlteil ist mit dem Basiskörper unmittelbar oder mittelbar - über ein Zwischenstück (Adapterteil) - verbunden. Der Verbund von Hohlteil und Basiskörper ist als Schweißverbund unter Ausbildung einer Schweißkontaktfläche ausgeführt. Die Längsachsen von Hohlteil und Basiskörper verlaufen dabei koaxial. Im Längsschnitt des Schweißverbundes bei vertikal orientierter Basiskörper-Längsachse verläuft die Schweißkontaktfläche beispielsweise vertikal (parallel zur Basiskörper-Längsachse), horizontal (senkrecht zur Basiskörper-Längsachse), schräg (geneigt zur Basiskörper-Längsachse), gekrümmt oder in einer abschnittsweisen Kombination dieser Verläufe.

Der langgestreckte Hohlkanal des Hohlteils hat beispielsweise einen polygonalen, runden, ovalen und bevorzugt einen kreisrunden Querschnitt. Im Längsschnitt ist der Hohlkanal zylinderförmig, oder er ist nicht zylindrisch und weist eine Verengung oder eine Erweiterung in Längsrichtung auf. Die Hohlkanal-Innengeometrie ist so ausgelegt, dass die kleinste Querschnittskontur in der Projektion auf die obere Basiskörper-Stirnseite außerhalb eines Lochbereich-Umkreises liegt, innerhalb dem die Durchgangslöcher vollständig oder mit mindestens 90% ihres Loch-Durchmessers liegen. Im einfachsten Fall - bei einem Hohlkanal mit kreisrundem Querschnitt und zylindrischem Längsschnitt - ist der Hohlkanal-Innendurchmesser größer als der Lochbereich-Umkreis. Bei einer Abdeckung des Durchgangsloch-Durchmessers von 10% kann durch die verbleibende Öffnung ein runder Kernstab eingeführt werden, dessen Durchmesser 90% des Loch-Durchmessers oder weniger beträgt.

Die Durchgangslöcher haben jeweils einen Durchmesser, der groß genug ist, damit der jeweilige Kernstab eingeführt werden kann. Umgekehrt hat der Querschnitt des Kernstabs demnach eine Außenkontur, die kleiner ist als der Durchmesser des Durchgangslochs. Beispielsweise hat der Kernstab einen Außendurchmesser der kleiner ist als der Durchgangsloch-Durchmesser. Je größer der Größenunterschied zwischen Kernstab-Außenkontur und Durchgangsloch-Durchmesser ist, umso leichter ist es, den Kernstab in das Durchgangsloch einzuführen. Auch ein Durchgangsloch, dessen Querschnitt von einem bereits angeschweißten Halter teilweise überdeckt ist, kann noch vom ersten, oberen Ende des Basiskörpers aus mit einem Kernstab bestückt werden, unter der Voraussetzung, dass der nicht überdeckte Querschnitt des Durchgangsloches die Kernstab-Außenkontur im Querschnitt umhüllt. Andererseits geht mit zunehmenden Größenunterschied zwischen dem Durchgangsloch-Durchmesser und der Kernstab-Außenkontur eine verringerte axiale mechanische Führung des Kernstabs im Durchgangsloch und eine Verschlechterung der Qualität der Lichtleitung in der Mehrkernfaser einher. Es hat sich gezeigt, dass bei einer Abdeckung eines Durchgangslochs bis zu 10% seines Durchmessers durch den angeschweißten Halter noch eine Bestückung vom ersten, oberen Ende des Basiskörpers aus mit einem Kernstab möglich ist, dessen Querschnittsabmessungen groß genug sind, um die oben genannten Nachteile zu vermeiden. Die Überdeckung der Durchgangslöcher durch den angeschweißten Halter ist aber vorzugsweise geringer als 10%, damit auch die Bestückung mit Kernstäben ermöglicht wird, deren Querschnitts-Außenkontur in geringerem Maß vom Durchmesser der Durchgangslöcher abweicht. Besonders bevorzugt gibt es keine Überdeckung der Durchgangslöcher durch den angeschweißten Halter. Um mögliche Verformungen des Durchgangsloch beim Anschweißen des Halters sicher zu verhindern, hat das Hohlteil vorzugsweise einen Innendurchmesser, der größer ist als der Lochbereich-Umkreis, beispielsweise ist er um mindestens 2mm größer und besonders bevorzugt um mindestens 5mm größer als der Lochbereich-Umkreis.

Der Außenquerschnitt des Hohlteils ist beispielsweise polygonal, rund, oval und im einfachsten und bevorzugten Fall ist er kreisrund. Im Längsschnitt ist die Außenkontur beispielsweise zylinderförmig oder sie ist nicht zylindrisch und weist gegebenenfalls eine Verengung oder eine Erweiterung in Längsrichtung auf. Das dem Basiskörper zugewandte Ende des Hohlteils hat eine gerade, schräge, gebogene oder strukturierte Stirnseite. Dessen maximale "radiale Außenabmessung" ergibt sich aus der Projektion auf die obere Basiskörper-Stirnseite in Richtung der Hohlteil-Längsachse. Die maximale radiale Außenabmessung des Hohlteils begrenzt die Außenabmessung der Schweißkontaktfläche (in lateraler Richtung); die radiale Außenabmessung der Schweißkontaktfläche (in lateraler Richtung) kann kleiner sein, aber nicht größer als die maximale radiale Außenabmessung des Hohlteils.

Dadurch, dass die maximale radiale Außenabmessung der Stirnseite des Hohlteils größer ist als der Basiskörper-Außendurchmesser, kann eine Schweißkontaktfläche gebildet werden, die größer ist als nur die von Basiskörper-Außendurchmesser und Lochbereich-Umkreis begrenzte Ringfläche.

Das Ziehen des Bauteil-Ensembles aus Basiskörper und Kernstäben zu der Mehrkernfaser oder die Weiterverarbeitung zu einer Vorform für die Mehrkernfaser umfasst eine einmalige oder wiederholte Durchführung von einem oder mehreren der folgenden Heißformprozesse: Elongieren, Kollabieren, Kollabieren und gleichzeitiges Elongieren, Aufkollabieren von zusätzlichem Mantelmaterial, Aufkollabieren von zusätzlichem Mantelmaterial und anschließendes Elongieren, Aufkollabieren von zusätzlichem Mantelmaterial und gleichzeitiges Elongieren.

Zum Halten des Bauteil-Ensembles in einer Zieh-, Elongier- oder Kollabiervorrichtung wird vorab der Schweißverbund zwischen Halter und Basiskörpers hergestellt. Dabei ermöglicht der Halter die stabile Halterung auch vergleichsweise großvolumiger und schwerer Bauteil-Ensembles und/oder solcher Bauteil-Ensembles, bei denen der Lochbereich-Umkreis nahe am Basiskörper-Außendurchmesser liegt.

Es hat sich bewährt, wenn vor dem Einbringen der Kernstäbe in die Durchgangslöcher mindestens ein Teil der Schweißkontaktfläche, bevorzugt die gesamte Schweißkontaktfläche, erzeugt wird.

Das Einbringen der Kernstäbe in die Durchgangslöcher erfolgt nach dem vollständigen oder mindestens teilweisen Herstellen des Schweißverbundes zwischen Halter und Basiskörper. Eine Beeinträchtigung der Kernstäbe durch Ablagerungen von Sublimat und hohe Temperatur beim Schweißprozess wird so sicher vermieden oder vermindert.

Bei einer ersten erfindungsgemäßen Verfahrensvariante wird ein Teil der Schweißkontaktfläche an der Basiskörper-Mantelfläche erzeugt. Das Hohlteil greift dabei teilweise an der Mantelfläche des Basiskörpers an. Das obere Ende des Basiskörpers wird quasi in den Hohlkanal des Hohlteils eingesteckt. Dadurch ergeben sich mehrere Vorteile.
- Es steht eine quasi beliebig große Kontaktfläche (nämlich am Basiskörper-Außenmantel) für die Schweißverbindung zwischen Hohlteil und Basiskörper zur Verfügung. Infolge der großen Kontaktfläche können auch besonders schwere, großvolumige Bauteil-Ensembles sicher gehalten werden.
- Außerdem werden durch das Herstellen der Schweißverbindung im Bereich der Mantelfläche Durchgangslöcher und etwaige darin eingesetzte Kernstäbe thermisch weniger beeinflusst als beim Herstellen der Schweißverbindung auf der oberen Basiskörper-Stirnseite. Verformungen der Durchgangslöcher oder der darin eingesetzten Kernstäbe sowie Verunreinigungen infolge von Ablagerungen werden so vermieden oder vermindert. Dies gilt insbesondere auch für Durchgangslöcher und Kernstäbe, die nah am Rand des Basiskörpers angeordnet sind.
- Außerdem können durch die Schweißkontaktfläche an der Basiskörper-Mantelfläche Durchgangslöcher im Bereich der oberen Basiskörper-Stirnseite nicht verdeckt werden. Sie sind weiterhin frei zugänglich, so dass Kernstäbe auch nachträglich (nach dem Herstellen des Schweißverbundes) von der oberen Basiskörper-Stirnseite eingesetzt werden können. Beim Faserziehprozess oder bei der Weiterverarbeitung zur Vorform wird das Evakuieren des Ringspalts nicht verhindert oder beeinträchtigt.

Bei der ersten erfindungsgemäßen Verfahrensvariante wird die Schweißkontaktfläche sowohl an der Basiskörper-Mantelfläche als auch an der ersten, oberen Basiskörper-Stirnseite erzeugt.

Dadurch steht eine noch größere Schweißkontaktfläche zur Verfügung, so dass die Halterung schwerer Bauteil-Ensembles oder Vorformen ermöglicht wird. Der auf der Basiskörper-Längsachse verlaufende Abschnitt der Schweißkontaktfläche erleichtert außerdem das koaxiale Ausrichten der Längsachsen von Hohlteil und Basiskörper. Da die Schweißverbindung im Bereich der Basiskörper-Mantelfläche einen Teil des Gewichts des Bauteil-Ensembles (beziehungsweise der daraus durch Fixieren der Kernstäbe beziehungsweise durch Elongieren erzeugten Vorform) abträgt, muss die zur Verfügung stehende Kontaktierungsfläche auf der oberen Basiskörper-Stirnseite nicht vollständig ausgenutzt werden. So kann ein gewisser Sicherheitsabstand zu den Durchgangslöchern beziehungsweise den darin eingesetzten Kernstäben leicht eingehalten werden.

Es hat sich auch als vorteilhaft erwiesen, wenn sich die Schweißkontaktfläche an der Basiskörper-Mantelfläche entlang einer Erstreckungslänge in Richtung der Basiskörper-Längsachse erstreckt, wobei die Erstreckungslänge im Bereich von 5mm bis 100mm liegt, und bevorzugt mindestens 10mm, und besonders bevorzugt mindestens 20mm beträgt.

Das Hohlteil umgreift dabei das obere Ende des Basiskörpers, und die Schweißkontaktfläche verläuft vorzugsweise geschlossen um die Basiskörper-Mantelfläche. Bei Erstreckungslängen entlang der Basiskörper-Längsachse von 5mm oder mehr trägt die Schweißkontaktfläche nicht nur zur Gewichtsabtragung des Bauteil-Ensembles bei, sondern durch das Umgreifen des Hohlteils ergibt sich auch eine gewisse Führung für das Bauteil-Ensemble, die das koaxiale Ausrichten der Längsachsen von Basiskörper und Hohlteil und damit auch das Verschweißen erleichtert. Eine weitere Verbesserung ergibt sich bei Erstreckungslängen von mindestens 10mm, und besonders bei mindestens 20mm. Bei Erstreckungslängen von mehr als 100mm kann beginnt der Materialverlust beim Halter und beim Basiskörper die Vorteile durch die vergrößerte Schweißkontaktfläche und der verbesserten Führung und Ausrichtung des Bauteils zu überwiegen.

Dabei hat es sich insbesondere zur weiteren Erhöhung der Festigkeit der Schweißverbindung sowie zur Vereinfachung der Montage und Ausrichtung als vorteilhaft erwiesen, wenn die Schweißkontaktfläche über die Erstreckungslänge mindestens eine umlaufende Stufe und/oder mindestens eine umlaufende abgeschrägte Fase umfasst.

Im Längsschnitt gesehen zeigt die Schweißkontaktfläche gegebenenfalls einen nicht-geradlinigen Verlauf mit einem parallel zur Basiskörper-Längsachse verlaufenden Abschnitt sowie mindestens einer Stufe mit einem senkrecht zur Basiskörper-Längsachse verlaufenden Abschnitt und/oder mindestens einer Schräge mit einem geneigt zur Basiskörper-Längsachse verlaufenden Abschnitt. Dieser im Längsschnitt nicht-geradlinige Verlauf führt zu einer Vergrößerung der Schweißkontaktfläche. Die Innenkontur des Halters und die Außenkontur des Basiskörper sind dem nicht-geradlinige Verlauf der Schweißkontaktfläche entsprechend nach dem Schlüssel-Schloss-Prinzip aufeinander angepasst.

Bei einer zweiten erfindungsgemäßen Verfahrensvariante, die alternativ oder ergänzend zur ersten Verfahrensvariante ausführbar ist, wird ein Adapterteil eingesetzt, das im Bereich des oberen Endes mit dem Basiskörper verbunden wird, und das eine radiale Außenabmessung aufweist, die größer ist als der Basiskörper-Außendurchmesser, wobei das Adapterteil mit dem hohlzylinderförmigen Hohlteil verschweißt wird.

Das Adapterteil wird mit der Mantelfläche und/oder mit der oberen Stirnseite des Basiskörpers verbunden, beispielsweise durch Verschweißen. Es liegt beispielsweise als Ringprofil oder in Plattenform vor und es hat eine Längs- oder Mittelachse, die koaxial zur Basiskörper-Längsachse verläuft.

Da es eine radiale Außenabmessung aufweist, die größer ist als der Basiskörper-Außendurchmesser, vergrößert es die für eine Schweißverbindung mit dem Hohlteil zur Verfügung stehende Kontaktierungsfläche. Insoweit modifiziert das mit dem Basiskörper verbundene Adapterteil das erste, obere Ende des Basiskörpers in der Art, dass es eine größere Schweißkontaktfläche ermöglicht.

Durch den unmittelbaren Kontakt zwischen dem Hohlteil und dem Adapterteil kann die gesamte Schweißkontaktfläche ausgebildet werden. Vorteilhafterweise wird ein Teil der Schweißkontaktfläche durch unmittelbaren Kontakt zwischen Hohlteil und Adapterteil, und ein weiterer Teil der Schweißkontaktfläche durch direkten Kontakt zwischen Hohlteil und Basiskörper ausgebildet. In dem Fall wird die Verbindung zwischen Hohlteil und Basiskörper aus einer Schweißkontaktfläche gebildet, die sich aus einem Anteil durch unmittelbaren Kontakt und einem Anteil durch mittelbaren Kontakt (über das Adapterteil als Zwischenelement) zwischen Hohlteil und Basiskörper zusammensetzt.

Die maximale radiale Außenabmessung des Hohlteils ist nicht unbedingt größer als die des Adapterteils. Im bevorzugten Fall schließt das koaxial mit dem Adapterteil verschweißte Hohlteil radial bündig mit dem Adapterteil ab; das heißt: es steht nicht über und es ist nicht nach innen versetzt.

Für die Verbindung zwischen Adapterteil und Basiskörper sind die oben erläuterten Beispiele für die unmittelbare Verbindung von Hohlteil und Basiskörper (durch Verschweißen mit der Basiskörper-Mantelfläche und/oder mit der oberen Basiskörper-Stirnseite) geeignet und bevorzugt.

Vorteilhafterweise wird ein Adapterteil mit dem Basiskörper verbunden, das als an der Mantelfläche des Basiskörpers umlaufendes Ringprofil ausgebildet ist. Form und Größe der Innenmantelfläche des Ringprofils einerseits und der Mantelfläche des Basiskörpers im Bereich der oberen Stirnseite andererseits korrespondieren dabei miteinander nach dem Schlüssel-Schloss-Prinzip. Im einfachsten Fall entspricht der Innendurchmesser des Profilrings dem Außendurchmesser des Basiskörpers in diesem Bereich.

Im Querschnitt hat das Ringprofil vorzugsweise eine polygonale Form, beispielsweise Rechteck-, Trapez-, Dreieck- oder Kegelstumpfform, wobei es eine dem Hohlteil zugewandte plane Oberseite aufweist, die mit dem Hohlteil verschweißt wird.

Vorteilhafterweise wird ein im Wesentlichen plattenförmiges Adapterteil mit der oberen Stirnseite des Basiskörpers verbunden, wobei das plattenförmige Adapterteil den Lochbereich-Umkreis mindestens teilweise überdeckt, und wobei sich mindestens ein Teil der Durchgangslöcher durch das Adapterteil hindurch erstreckt. Die Unterseite des Adapterteils ist mit der oberen Stirnseite des Basiskörper verbunden, beispielsweise durch Verschweißen. Auf der Oberseite des Adapterteils wird das Hohlteil aufgeschweißt. Die Form und Abmessungen von Oberseite und Unterseite können identisch sein (zylindrische Scheibe), oder sie können sich voneinander unterschieden. Vorzugsweise hat das Adapterteil die Form einer Konusscheibe, bei der die radialen Abmessungen der Oberseite größer sind als die der Unterseite. Sie kann als Vollplatte oder Lochplatte ausgebildet sein, wobei die Lochplatte beispielsweise mindestens eine zentrale Öffnung aufweist.

Da das Adapterteil - ebenso wie das Hohlteil - eine maximale radiale Außenabmessung aufweist, die größer ist als der Basiskörper-Außendurchmesser, vergrößert es die für die Schweißverbindung mit dem Hohlteil zur Verfügung stehende Kontaktierungsfläche. Die Schweißkontaktfläche wird bei dieser Verfahrensweise in der Regel allein durch die unmittelbare Verbindung zwischen Hohlteil und Adapterteil erzeugt, wobei gegebenenfalls eine ausschließlich mittelbare Verbindung (über das Adapterteil als Zwischenelement) zwischen Hohlteil und Basiskörper erzeugt wird.

Das im Wesentlichen plattenförmige Adapterteil ist mit Durchgangslöchern versehen, die koaxial zu allen Durchgangslöchern oder zu mindestens einem der Durchgangslöcher des Basiskörpers verlaufen. Vorzugsweise werden die koaxialen Durchgangslöcher im Adapterteil und im Basiskörper in einem gemeinsamen Arbeitsgang durch Bohren erzeugt. Gegebenenfalls wird das Adapterteil vor dem Bohrvorgang mit der oberen Basiskörper-Stirnseite verbunden; beispielsweise durch Verschweißen.

Bei einer dritten erfindungsgemäßen Verfahrensvariante, die alternativ zur ersten und zur zweiten Verfahrensvariante ausführbar ist, wird ein Basiskörper mit einem sich konisch nach oben erweiternden ersten Ende eingesetzt, das beim Rundschleifen der Basiskörper-Mantelfläche zur Einstellung des nominalen Außendurchmessers erzeugt wird, indem dort kein oder weniger Glasmaterial abgetragen wird, wobei der Hohlzylinder mit dem verdickten ersten Ende so verschweißt wird, dass die jeweiligen Längsachsen koaxial verlaufen.

Hinsichtlich des Halbzeugs wird die oben genannte technische Aufgabe ausgehend von einem Halbzeug der eingangs genannten Gattung erfindungsgemäß dadurch gelöst,
dass die Schweißkontaktfläche sowohl an der Basiskörper-Mantelfläche als auch an einer ersten, oberen Basiskörper-Stirnseite ausgebildet ist,
und/oder dass ein Adapterteil im Bereich des ersten Basiskörper-Endes mit dem Basiskörper verbunden ist, das eine radiale Außenabmessung aufweist, die größer ist als der Basiskörper-Außendurchmesser, wobei das Adapterteil mit dem hohlzylinderförmigen Hohlteil verschweißt ist, oder dadurch dass der Basiskörper ein sich konisch nach oben erweiterndes erstes Ende aufweist, wobei der Hohlzylinder mit dem verdickten ersten Ende des Basiskörpers so verschweißt ist, dass die jeweiligen Längsachsen koaxial verlaufen

Das Halbzeug liegt als Schweißverbund aus Halter und Basiskörper vor. Nach Einfügen von Kernstäben in den Basiskörper kann daraus eine Mehrkernfaser gezogen werden oder er kann zu einer Vorform für eine Mehrkernfaser weiterverarbeitet werden.

Das erste Ende des Basiskörpers wird hier auch als "oberes Ende" und das gegenüberliegende, zweite Ende wird auch als "unteres Ende" bezeichnet. Dem ersten, oberen Ende ist eine erste, obere Basiskörper-Stirnseite zugeordnet. Der langgestreckte Basiskörper ist im Wesentlichen zylinderförmig und er hat einen kreisrunden Querschnitt. Am oberen und/oder am unteren Ende kann er eine Verdickung oder eine Verjüngung aufweisen. Der Basiskörper-Außendurchmesser wird am zylinderförmigen Längenabschnitt zwischen den Enden ermittelt.

Das Hohlteil ist mit dem Basiskörper unmittelbar oder mittelbar - über ein Zwischenstück (Adapterteil) - verbunden. Der Verbund von Hohlteil und Basiskörper ist als Schweißverbund unter Ausbildung einer Schweißkontaktfläche ausgeführt. Die Längsachsen von Hohlteil und Basiskörper verlaufen dabei koaxial. Im Längsschnitt des Schweißverbundes bei vertikal orientierter Basiskörper-Längsachse verläuft die Schweißkontaktfläche beispielsweise vertikal (parallel zur Basiskörper-Längsachse), horizontal (senkrecht zur Basiskörper-Längsachse), schräg (geneigt zur Basiskörper-Längsachse), gekrümmt oder in einer abschnittsweisen Kombination dieser Verläufe.

Der langgestreckte Hohlkanal des Hohlteils hat beispielsweise einen polygonalen, runden, ovalen und bevorzugt einen kreisrunden Querschnitt. Im Längsschnitt ist der Hohlkanal zylinderförmig, oder er ist nicht zylindrisch und weist eine Verengung oder eine Erweiterung in Längsrichtung auf. Die Hohlkanal-Innengeometrie ist so ausgelegt, dass die kleinste Querschnittskontur in der Projektion auf die obere Basiskörper-Stirnseite außerhalb eines Lochbereich-Umkreises liegt, innerhalb von dem die Durchgangslöcher bevorzugt vollständig oder mit mindestens 90% ihres Loch-Durchmessers liegen. Der Loch-Durchmesser ist größer als der Durchmesser des in dem Durchgangsloch aufzunehmenden Kernstabs; er ist beispielsweise um 10% größer, so dass eine geringe Abdeckung des Durchgangsloches das Befüllen mit dem Kernstab nicht verhindert. Im bevorzugten Fall - bei einem Hohlkanal mit kreisrundem Querschnitt und zylindrischem Längsschnitt - ist der Hohlkanal-Innendurchmesser größer als der Lochbereich-Umkreis. Bevorzugt gibt es keine Überdeckung der Durchgangslöcher durch den angeschweißten Halter. Gegebenenfalls ist die Außenkontur der Kernstäbe exakter an die Durchmesser der Durchgangslöcher anpassbar, was aus unter anderem wegen einer genaueren axialen Führung des Kernstabs in dem jeweiligen Durchgangsloch bevorzugt ist. Um mögliche Verformungen des Durchgangsloch beim Anschweißen des Halters sicher zu verhindern, hat das Hohlteil vorzugsweise einen Innendurchmesser, der größer ist als der Lochbereich-Umkreis, beispielsweise ist er um mindestens 2mm größer und besonders bevorzugt um mindestens 5mm größer als der Lochbereich-Umkreis.

Dadurch, dass die Projektion der Hohlkanal-Innenkontur auf die obere Basiskörper-Stirnseite vollständig außerhalb oder im Wesentlichen außerhalb des Lochbereich-Umkreises liegt, überdeckt das Hohlteil in der Projektion auf die Basiskörper-Stirnseite die Durchgangslöcher nicht oder allenfalls zu einem so geringen Umfang (mehr als 90% des Loch-Durchmessers ist nicht überdeckt), dass auch noch nach dem Anschweißen des Halters die Durchgangslöcher soweit zugänglich sind, dass die Bestückung der Durchgangslöcher mit Kernstäben vom ersten, oberen Ende des Basiskörpers aus möglich ist.

Der Außenquerschnitt des Hohlteils ist beispielsweise polygonal, rund, oval und im einfachsten und bevorzugten Fall ist er kreisrund. Im Längsschnitt ist die Außenkontur beispielsweise zylinderförmig oder sie ist nicht zylindrisch und weist gegebenenfalls eine Verengung oder eine Erweiterung in Längsrichtung auf. Das dem Basiskörper zugewandte Ende des Hohlteils hat eine gerade, schräge, gebogene oder strukturierte Stirnseite. Dessen maximale "radiale Außenabmessung" ergibt sich aus der Projektion auf die obere Basiskörper-Stirnseite in Richtung der Hohlteil-Längsachse. Die maximale radiale Außenabmessung des Hohlteils begrenzt die Außenabmessung der Schweißkontaktfläche (in lateraler Richtung); die radiale Außenabmessung der Schweißkontaktfläche (in lateraler Richtung) kann kleiner sein, aber nicht größer als die maximale radiale Außenabmessung des Hohlteils.

Dadurch, dass die radiale Außenabmessung der Stirnseite des Hohlteils größer ist als der Basiskörper-Außendurchmesser, kann auch die Schweißkontaktfläche größer sein als nur die von Basiskörper-Außendurchmesser und Lochbereich-Umkreis begrenzte Ringfläche.

Das Einbringen der Kernstäbe in die Durchgangslöcher des Halbzeugs erfolgt nach dem vollständigen oder mindestens teilweisen Herstellen des Schweißverbundes zwischen Halter und Basiskörper. Eine Beeinträchtigung der Kernstäbe durch Ablagerungen von Sublimat und hohe Temperatur beim Schweißprozess wird so sicher vermieden oder vermindert. Der Halter ermöglicht die stabile Halterung auch vergleichsweise großvolumiger und schwerer Bauteil-Ensembles und Vorformen.

Bei einer ersten erfindungsgemäßen Ausführungsform verläuft mindestens ein Teil der Schweißkontaktfläche an der Basiskörper-Mantelfläche. Das Hohlteil greift dabei teilweise an der Mantelfläche des Basiskörpers an. Das obere Ende des Basiskörpers ist quasi in den Hohlkanal des Hohlteils eingesteckt. Dadurch ergeben sich mehrere Vorteile.
- Es steht eine quasi beliebig große Kontaktfläche (nämlich am Basiskörper-Außenmantel) für die Schweißverbindung zwischen Hohlteil und Basiskörper zur Verfügung. Infolge der großen Kontaktfläche können auch besonders schwere, großvolumige Bauteil-Ensembles und Vorformen sicher gehalten werden.
- Außerdem werden durch das Herstellen der Schweißverbindung im Bereich der Mantelfläche Durchgangslöcher und etwaige darin eingesetzte Kernstäbe thermisch weniger beeinflusst als beim Herstellen der Schweißverbindung auf der oberen Basiskörper-Stirnseite. Verformungen der Durchgangslöcher oder der darin eingesetzten Kernstäbe sowie Verunreinigungen infolge von Ablagerungen werden so vermieden oder vermindert. Dies gilt insbesondere auch für Durchgangslöcher und Kernstäbe, die nah am Rand des Basiskörpers angeordnet sind.
- Außerdem können durch die Schweißkontaktfläche an der Basiskörper-Mantelfläche Durchgangslöcher im Bereich der oberen Basiskörper-Stirnseite nicht verdeckt werden. Sie sind weiterhin frei zugänglich, so dass Kernstäbe auch nachträglich (nach dem Herstellen des Schweißverbundes) von der oberen Basiskörper-Stirnseite eingesetzt werden können. Beim Faserziehprozess oder bei der Weiterverarbeitung zur Vorform wird das Evakuieren des Ringspalts nicht verhindert oder beeinträchtigt.

Vorteilhafte Ausgestaltungen des erfindungsgemäßen Halbzeugs ergeben sich aus den Unteransprüchen. Soweit in den Unteransprüchen angegebene Ausgestaltungen des Halbzeugs den in Unteransprüchen zum erfindungsgemäßen Verfahren genannten Verfahrensweisen nachgebildet sind, wird zur ergänzenden Erläuterung auf die obigen Ausführungen zu den entsprechenden Verfahrensansprüchen verwiesen.

### Definitionen und Messmethoden

Einzelne Begriffe der obigen Beschreibung werden im Folgenden ergänzend definiert. Die Definitionen sind Bestandteil der Beschreibung der Erfindung. Für Begriffe und Messerverfahren, die in der Beschreibung nicht speziell definiert sind, ist die Auslegung gemäß der Internationalen Fernmeldeunion (ITU; International Telecommunication Union) maßgeblich. Bei einem Widerspruch zwischen einer der folgenden Definitionen und der übrigen Beschreibung ist das in der übrigen Beschreibung Gesagte maßgeblich.

### Basiskörper

Der Basiskörper besteht aus Glas und er enthält Durchgangsbohrungen zur Aufnahme von Kernstäben. Das an die Durchgangsbohrungen angrenzende Glas hat einen Brechungsindex, der niedriger ist als dasjenige Glas der Kernstäbe mit dem höchsten Brechungsindex. Es besteht beispielsweise aus undotiertem Quarzglas oder es enthält mindestens einen den Brechungsindex des Glases absenkenden Dotierstoff. Fluor und Bor sind Dotierstoffe, die den Brechungsindex von Quarzglas absenken können. Der Basiskörper ist langgestreckt und hat im Wesentlichen Zylinderform mit einem nominalen Außendurchmesser. Im Bereich der stirnseitigen Enden können Abweichungen von der Zylinderform und vom nominalen Außendurchmesser vorhanden sein.

### Kernstab

Die Kernstäbe bestehen aus Glas und haben in radialer Richtung einen homogenen oder einen nicht-homogenen Brechungsindex-Verlauf. Das Glas mit dem höchsten Brechungsindex befindet sich in der Regel in der zentralen Achse des Kernstabs. Es besteht beispielsweise aus Quarzglas, dem mindestens ein Dotierstoff zur Erhöhung des Brechungsindex zugesetzt ist.

### Halter

Der Halter dient zur Halterung eines Bauteil-Ensembles oder einer Vorform in einer Vorrichtung zum Ziehen oder Elongieren. Er ist einteilig oder er ist aus mehreren Teilen zusammengesetzt.

Das eine, obere Ende des Halters ist in der Vorrichtung fixiert, das andere, gegenüberliegende, untere Ende ist unmittelbar oder mittelbar - über ein Zwischenelement, wie beispielsweise über ein Adapterteil - mit dem Basiskörper des Bauteil-Ensembles beziehungsweise der Vorform verschweißt. Das dem Basiskörper zugewandte Ende des Halters umfasst ein Hohlteil mit einem zentralen Hohlkanal. Im angeschweißten Zustand verlaufen die Längsachsen von Hohlkanal und Basiskörper koaxial.

Mindestens das mit dem Basiskörper verschweißte Ende des Halters besteht aus Glas, vorzugsweise aus dem gleichen Glas wie der Basiskörper, beispielsweise aus Quarzglas.

### Bauteil-Ensemble / (primäre) Vorform / sekundäre Vorform / Halbzeug

Das "Bauteil-Ensemble" umfasst den Basiskörper mit die in die Durchgangslöcher eingesetzten Kernstäbe. Durch Fixieren der Kernstäbe in den Durchgangslöchern; beispielsweise durch Verengung eines Basiskörper-Endes, wird eine "Vorform" erhalten, die hier auch als "primäre Vorform" bezeichnet wird. Das Bauteil-Ensemble oder die (primäre) Vorform werden zu einer "sekundären Vorform" oder direkt zu der Mehrkernfaser elongiert. Als "Halbzeug" wird der Schweißverbund zwischen Halter und Basiskörper bezeichnet.

### Quarzglas

Quarzglas ist beispielsweise aus natürlich vorkommendem SiO₂-Rohstoff erschmolzen (natürliches Quarzglas), oder es ist synthetisch erzeugt (synthetisches Quarzglas) oder es besteht aus Mischungen dieser Quarzglassorten. Synthetisches, transparentes Quarzglas wird beispielsweise durch Flammenhydrolyse oder Oxidation synthetisch erzeugter Siliziumverbindungen, durch Polykondensation organischer Siliziumverbindungen nach dem so genannten Sol-Gel-Verfahren oder durch Hydrolyse und Fällung anorganischer Siliziumverbindungen in einer Flüssigkeit erhalten.

### Schweißen

Im Zusammenhang mit Bauteilen aus Glas ist unter Schweißen zu verstehen, dass die Bauteile an einer Kontaktfläche miteinander verschmolzen sind. Das Verschmelzen erfolgt durch Aufheizen der zu verschweißenden Bauteile mindestens im Bereich der Kontaktfläche mittels einer Heizquelle, wie einem Ofen, einem Brenner oder einem Laser.

### Schweißkontaktfläche

Über die Schweißkontaktfläche wird das Gewicht des Bauteil-Ensembles beziehungsweise das Gewicht der Vorform über den Halter abgetragen. Die Größe der Schweißkontaktfläche ist maßgeblich für die Festigkeit des Schweißverbundes von Halter und Basiskörper beziehungsweise von Halter und Vorform.

Die Schweißkontaktfläche ist die Fläche der Schweißverbindung zwischen dem Halter einerseits und andererseits dem Basiskörper beziehungsweise der Vorform und/oder eines mit dem Basiskörper verbundenen Zwischenelements. Die seitens des Halters zur Verfügung stehende Kontaktierungsfläche bestimmt und begrenzt die Größe der Schweißkontaktfläche.

Die Schweißkontaktfläche ist unmittelbar und/oder mittelbar zwischen dem Halter und dem Basiskörper ausgebildet. Bei einer unmittelbaren Ausführung verbindet die Schweißkontaktfläche Halter und Basiskörper direkt miteinander. Bei der mittelbaren Ausführung sind Halter und Basiskörper nur in mittelbarem Kontakt miteinander, also durch Vermittlung eines mit dem Basiskörper verbundenen Zwischenelements, und die Schweißkontaktfläche verbindet den Halter mit dem Zwischenelement.

### Adapterteil / Zwischenelement

Das Adapterteil ist einstückig oder es ist aus mehreren miteinander verbundenen Teilstücken zusammengesetzt. Es ist mit dem Basiskörper verbunden (beispielsweise durch Verschweißen) und dabei auf der oberen Stirnseite des Basiskörper und/oder seitlich an dessen Mantelfläche angeordnet. Infolge der Verbindung mit dem Basiskörper ist das Adapterteil geeignet, die zur Verfügung stehende Kontaktierungsfläche mit dem Halter und damit die Schweißkontaktfläche zu vergrößern. Mindestens ein Teil der Schweißkontaktfläche ist dabei zwischen Halter und Adapterteil ausgebildet. Über diesen Teil der Schweißkontaktfläche ist der Halter mittelbar mit dem Basiskörper verbunden. Insoweit wirkt das Adapterteil auch als Zwischenelement zwischen Basiskörper und Halter.

### Positionsangaben: oben / unten

Die Angaben beziehen sich auf Positionen beim Elongierprozess beziehungsweise beim Faserziehprozess. "Unten" bezeichnet die Position in Ziehrichtung, "Oben" die Position entgegen der Ziehrichtung.

### Querschnitt

Den Schnitt senkrecht zur Längsrichtung/Längsachse.

### Längsschnitt

Einen Schnitt parallel zur Längsrichtung/Längsachse.

### Ausführungsbeispiel

Nachfolgend wird die Erfindung anhand eines Ausführungsbeispiels und einer Zeichnung näher erläutert. Im Einzelnen zeigt in schematischer Darstellung
- **Figur 1**: einen Querschnitt einer (primären) Vorform für eine Mehrkernfaser in einer Draufsicht auf den angeschweißten Halter in einer ersten Ausführungsform,
- **Figur 2**: die Vorform von Figur 1 in einem Längsschnitt,
- **Figur 3**: einen Längsschnitt einer Ausführungsform eines Halbzeugs in Form einer Vorform für Mehrkernfasern,
- **Figur 4**: einen Längsschnitt einer Ausführungsform eines Halbzeugs in Form einer Vorform für Mehrkernfasern,
- **Figur 5**: einen Längsschnitt einer Ausführungsform eines Halbzeugs in Form einer Vorform für Mehrkernfasern,
- **Figur 6**: einen Längsschnitt einer Ausführungsform eines Halbzeugs in Form einer Vorform für Mehrkernfasern,
- **Figur 7**: einen Längsschnitt einer Ausführungsform eines Halbzeugs in Form einer Vorform für Mehrkernfasern, und
- **Figur 8**: einen Querschnitt einer Vorform für eine Mehrkernfaser in einer Draufsicht auf den angeschweißten Halter in einer weiteren Aus-führungsform.

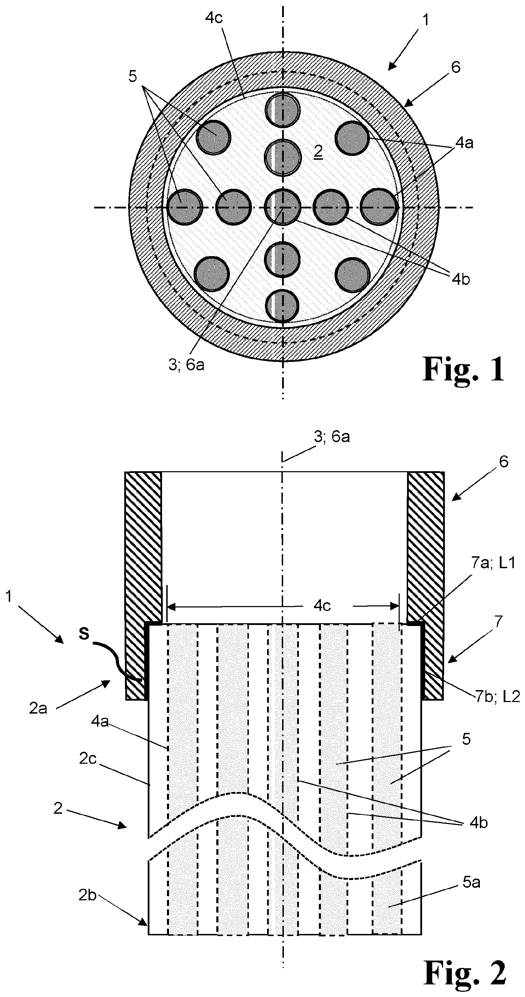

**Figur 1** zeigt schematisch einen Querschnitt einer Vorform 1 für eine Mehrkernfaser, die anhand des Herstellungsverfahrens der Erfindung herstellbar ist. **Figur 2** zeigt die Vorform 1 in einem Längsschnitt.

Die Vorform 1 umfasst einen Mantelmaterial-Zylinder 2 aus synthetisch erzeugtem, nicht-dotiertem Quarzglas mit einem oberen stirnseitigen Ende 2a und einem unteren stirnseitigen Ende 2b und mit einer Zylindermantelfläche 2c. Der Mantelmaterial-Zylinder 2 hat typischerweise eine Länge im Bereich von 500 bis 1500mm und einen nominalen Außendurchmesser im Bereich von 80 bis 230 mm. In diesem Ausführungsbeispiel und in allen folgenden Ausführungsbeispiel beträgt die Länge 1000mm und der nominale Außendurchmesser beträgt 200mm .

Durch den Mantelmaterial-Zylinder 2 erstrecken sich in Richtung der Zylinderlängsachse 3 eine Vielzahl von Durchgangsbohrungen 4a; 4b. Die Durchgangsbohrungen 4a; 4b dienen jeweils zur Aufnahme eines Kernstabs 5 mit im Wesentlichen kreisförmigem Querschnitt. Die Kernstäbe 5 bestehen bei allen Ausführungsbeispielen aus synthetisch erzeugtem Quarzglas, das in üblicher Weise mit Germanium dotiert ist. Die Durchgangsbohrungen 4a; 4b sind in einem symmetrischen Muster angeordnet, wobei die Durchgangsbohrungen 4a von der vertikal orientierten Mantelmaterial-Zylinder-Längsachse 3 am weitesten entfernt sind und an einen Lochbereich-Umkreis 4c angrenzen, der koaxial zur Längsachse 3 verläuft, und die übrigen Durchgangsbohrungen 4b von dem Lochbereich-Umkreis 4c weiter entfernt sind.

An das obere stirnseitige Ende 2a des Mantelmaterial-Zylinders 2 ist ein Hohlzylinder 6 aus natürlich vorkommendem Quarzkristall erschmolzenem, nicht-dotiertem Quarzglas angeschweißt. Der Hohlzylinder 6 hat eine Schwerpunkts- und Mittelachse 6a, die koaxial zur Mantelmaterial-Zylinder-Längsachse 3 verläuft.

Figur 2 zeigt, dass das Anschweißende 7 des Hohlzylinders 6, das dem oberen stirnseitigen Ende 2a des Mantelmaterial-Zylinders 2 zugewandt ist, über einen vertikal orientierten Längenabschnitt 7b eine Innendurchmesser-Erweiterung aufweist. Der erweiterte Innendurchmesser entspricht dem Außendurchmesser des Mantelmaterial-Zylinders 2. Der vertikal orientierte Längenabschnitt 7b hat eine Länge L2 und liegt an der Mantelfläche des Mantelmaterial-Zylinders 2 an, und er ist mit diesem verschweißt.

Die innen umlaufende Stufenfläche 7a ist horizontal orientiert und hat eine Stufentiefe L1. Sie liegt auf dem oberen stirnseitigen Ende 2a des Mantelmaterial-Zylinders 2 auf, und sie ist mit diesem verschweißt. Aus den verschweißten Längenabschnitten L1 und L2 und den dazugehörigen radialen Abmessungen ergibt sich die Größe der Schweißkontaktfläche, welche die Festigkeit der Schweißverbindung bestimmt. Diese Abmessungen sind für das Ausführungsbeispiel 1 und für die nachfolgenden Ausführungsbeispiele 2 bis 7 in Tabelle 1 zusammengefasst. Die Schweißkontaktfläche ist in den Längsachsschnitten der Figuren 2 bis 8 durch dicke schwarze Linien S hervorgehoben.

Die innenliegende, umlaufende Stufenfläche 7a endet bei einem Innendurchmesser von 180mm. Dieser Durchmesser ist größer als der Durchmesser (170mm) des Lochbereich-Umkreises 4c. Das heißt, die innenliegende, umlaufende Stufenfläche 7a überdeckt keine der Kernstäbe 5. Und sie überdeckt auch keine der Durchgangsbohrungen 4a; 4b. Der Durchmesser der Durchgangsbohrungen liegt typicherweise im Bereich von 5mm bis 50mm und beträgt bei diesem Ausführungsbeispiel und bei allen nachfolgend beschriebenen Ausführungsbeispielen 30mm.

Nachfolgend wird die Herstellung der Vorform 1 gemäß den Figuren 1 und 2 näher erläutert:
Es wird ein Zylinder aus nicht dotiertem, synthetisch erzeugtem Quarzglas mit einer Länge von 1000mm erzeugt und durch Rundschleifen auf einen nominalen Außendurchmesser von 200mm eingestellt. Durchgangsbohrungen 4a, 4b mit einem Durchmesser von 30mm werden durch mechanisches Bohren in Richtung der Längsachse 3 erzeugt. Die am weitest von der Längsachse 3 entfernten Durchgangsbohrungen 4a liegen dabei innerhalb des Umkreises 4c mit einem Durchmesser von170mm.

Danach wird das innen gestufte Anschweißende 7 des Hohlzylinders 6 aus nicht-dotiertem, synthetisch erzeugtem Quarzglas mit der oberen Stirnseite und mit der Mantelfläche des Mantelmaterial-Zylinders 2 kontaktiert und verschweißt. Das Verschweißen geschieht durch Erhitzen des Anschweißendes 7 mittels einer Brennerflamme. Dabei werden eine um die Zylindermantelfläche 2 umlaufende vertikal orientierte Schweißfläche mit der Breite L2 und auf der Stirnseite verlaufende ringförmige Schweißfläche mit der Breite L1 erzeugt wird.

Es werden Kernstäbe 5 aus Ge-dotiertem Quarzglas mit einer Länge von etwa 1000mm und einem Außendurchmesser von etwa 28mm hergestellt. Dafür sind bekannte Techniken geeignet, wie beispielsweise VAD-Verfahren (Vapor Phase Axial Deposition), OVD-Verfahren (Outside Vapor Deposition) oder MCVD-Verfahren (Modified Chemical Vapor Deposition).

Die Kernstäbe 5 werden in die Durchgangsbohrungen 4a; 4b eingeführt. Das Einführen in die Durchgangsbohrungen 4a; 4b kann sowohl von unten als auch von oben erfolgen, da der angeschweißte Hohlzylinder 6 die Durchgangsbohrungen 4a; 4b nicht verdeckt und weil die Durchgangsbohrungen 4a; 4b durch das Anschweißen des Hohlzylinders 6 nicht verformt worden sind. Bevorzugt erfolgt das Einführen der Kernstäbe 5 in die Durchgangsbohrungen 4a; 4b von oben.

Anschließend wird das untere Ende des mit den Kernstäben 5 bestückten Mantelmaterial-Zylinders 2 erhitzt, so dass die Ringspalte um die Kernstäbe 5 kollabieren. Das so fixierte Bauteil-Ensemble aus Mantelmaterial-Zylinder 2 und Kernstäben 5 bildet die primäre Vorform 1, die anschließend zu einer sekundären Vorform elongiert wird. Dabei wird die Vorform 1 in einer Elongier-Vorrichtung mittels des Hohlzylinders 6 in vertikaler Ausrichtung der Längsachse 3 gehalten und gleichzeitig wird am Hohlzylinder 6 ein Unterdruck angelegt. Die so erzeugte sekundäre Vorform wird abschließend in üblicher Weise in einer Ziehvorrichtung zu einer Mehrkernfaser gezogen, wobei die sekundäre Vorform ebenfalls mittels des Hohlzylinder 6 gehalten wird.

Bei der oben beschriebenen, bevorzugten Verfahrensweise erfolgt das Einführen der Kernstäbe 5 nach dem Verschweißen des Mantelmaterial-Zylinders 2 mit dem Hohlzylinder 6. Bei einer anderen, weniger bevorzugten Verfahrensweise werden die Kernstäbe 5 in die Durchgangsbohrungen 4a; 4b eingeführt und erst danach werden der Mantelmaterial-Zylinder 2 und der Hohlzylinder 6 miteinander verschweißt.

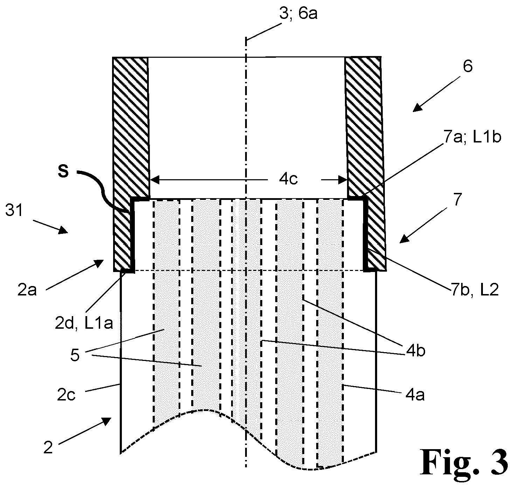

Sofern in den Figuren 3 bis 7 dieselben Bezugsziffern wie in den Figuren 1 und 2 verwendet sind, so sind damit baugleiche oder äquivalente Bauteile und Bestandteile bezeichnet, wie sie oben anhand der Beschreibung der ersten Ausführungsform der Vorform 1 und deren Herstellung näher erläutert sind. Bei allen Ausführungsformen der Vorform ist der Außendurchmesser des Hohlzylinders größer als der des Mantelmaterial-Zylinders 2 und sein Innendurchmesser ist größer als der Lochbereich-Umkreis 4c.

**Tabelle 1 (alle Längenangaben in mm)**

| | **Ausführungsbeispiel** | | | | | | |
|---|---|---|---|---|---|---|---|
| | **1 (****Fig. 2****)** | **2 (****Fig. 3****)** | | **4 (****Fig. 4****)** | **5 (****Fig. 5****)** | **6 (****Fig. 6****)** | **7 (****Fig. 7****)** |
| **MM-Zylinder** | | | | | | | |
| Material | Synthetisches Quarzglas | Synthetisches Quarzglas | | Synthetisches Quarzglas | Synthetisches Quarzglas | Synthetisches Quarzglas | Synthetisches Quarzglas |
| Form | zylinderförmig | überwiegend zylinderförmig | | zylinderförmig | zylinderförmig | überwiegend zylinderförmig | zylinderförmig |
| Maximaler AD | 200 | 200 | | 200 | 200 | 150 | 200 |
| Minimaler AD | 200 | 190 | | 200 | 200 | 130 | 200 |
| Nominaler AD | 200 | 200 | | 200 | 200 | 130 | 200 |
| Lochbereich-Umkreis | 170 | 170 | | 170 | 170 | 120 | 170 |
| | | | | | | | |

| **Halter (Hohlteil)** | | | | | | | |
|---|---|---|---|---|---|---|---|
| Material | Natürliches Quarzglas | Natürliches Quarzglas | | Natürliches Quarzglas | Natürliches Quarzglas | Natürliches Quarzglas | Natürliches Quarzglas |
| Form | überwiegend zylinderförmig | überwiegend zylinderförmig | | zylinderförmig | zylinderförmig | zylinderförmig | zylinderförmig |
| AD | 220 | 210 | | 220 | 220 | 150 | 220 |
| Minimaler ID | 180 | 180 | | 180 | 176 | 122 | 180 |
| Maximaler ID | 200 | 190 | | 180 | 176 | 122 | 180 |
| Adapterteil | keiner | keiner | | | | keiner | |
| Material | | | | Synthetisches Quarzglas | Synthetisches Quarzglas | | Natürliches Quarzglas |
| Form | | | | polygonales Ringprofil | polygonales Ringprofil | | Konusscheibe (Kegelstumpf) |
| AD | | | | 220 | 220 | | 220 |
| ID | | | | 200 | 200 | | |
| Höhe | | | | 25 | 10 | | 25 |
| | | | | | | | |

| **Schweißkontaktfläche S** | | | | | | | |
|---|---|---|---|---|---|---|---|
| horizontal Anteil / Länge L1 | ca. 16% / 5 | ca. 24% / 8 | | 100% / 20 | 100% / 22 | 100% / 14 | 100% / 20 |
| vertikal Anteil / Länge L2 | ca. 84% / 25 | ca. 76% / 25 | | | | | |
| geneigt Anteil / Länge L3 | | | | | | | |
| L1 + L2 + L3 | 30 | 33 | | 20 | 22 | 14 | 20 |
| Gesamtflächengröße [mm²] | 18.760 | 20.520 | | 12.560 | 13.680 | 5979 | 12.560 |
| Δ Referenz (%) | +180 | +235 | | +144 | +157 | +305 | +144 |

Dabei bedeuten:
- MM-Zylinder:: Mantelmaterial-Zylinder
- ID:: Innendurchmesser
- AD:: Außendurchmesser
- Form "zylinderförmig":: durchgehend zylinderförmig
- Form "überwiegend zylinderförmig":: im Bereich des ersten Endes gibt es eine Abweichung von der Zylinderform
- Lochbereich-Umkreis:: Durchmesser des Kreises, innerhalb dem die Durchgangsbohrungen mit 100% oder zu mindestens 90% ihres Durchmessers liegen
- Länge L1:: Gesamtlänge der senkrecht zur Längsachse verlaufenden (horizontalen) Längenabschnitte der Schweißkontaktfläche (auf einer Seite des Längsschnitts durch die Hohlteil-Wandung)
- Länge L2:: Gesamtlänge der parallel zur Längsachse verlaufenden (vertikalen) Längenabschnitte der Schweißkontaktfläche (auf einer Seite des Längsschnitts durch die Hohlteil-Wandung)
- Länge L3:: Gesamtlänge der nicht horizontal und nicht vertikal verlaufenden Längenabschnitte der Schweißkontaktfläche (auf einer Seite des Längsschnitts durch die Hohlteil-Wandung)
- Anteil:: Flächenanteil des betreffenden Längenabschnitts bezogen auf die Gesamtfläche der Schweißkontaktfläche
- L1+L2+L3:: Gesamtlänge der Schweißkontaktfläche (auf einer Seite des Längsschnitts durch die Hohlteil-Wandung)
- Δ Referenz (%):: Differenz der Gesamtflächengröße bezogen auf die Flächengröße der Referenz-Schweißkontaktfläche (= Ringfläche zwischen nominalem Mantelmaterial-Zylinder-Außendurchmesser und Lochbereich-Umkreis)

In der letzten Zeile von Tabelle 1 ist der Unterschied der Gesamtflächengröße der Schweißkontaktfläche in Prozent angegeben, bezogen auf die Flächengröße einer Referenz-Schweißkontaktfläche, die als Ringfläche zwischen dem Außendurchmesser des Mantelmaterial-Zylinders und dem Lochbereich-Umkreis (ohne Überlappung der Durchgangsbohrungen) definiert ist. Daraus ergibt sich, dass bei allen Ausführungsbeispielen die Schweißkontaktfläche größer ist als die Schweißkontaktfläche des jeweiligen Referenzbeispiels.

Bei der in **Figur 3** gezeigten Ausführungsform der Vorform 31 ist im Unterschied zu Figur 2 das obere stirnseitige Ende 2a des Mantelmaterial-Zylinders 2 stufig eingeschnitten. Die so erzeugte Rechteckstufe 2d des Stufenprofils hat eine Tiefe L1a.

Das Anschweißende 7 des Hohlzylinders 6 weist über einen vertikal orientierten Längenabschnitt 7b eine Innendurchmesser-Erweiterung auf. Der erweiterte Innendurchmesser entspricht dem Außendurchmesser des Mantelmaterial-Zylinders 2 im Bereich der Rechteckstufe 2d. Der vertikal orientierte Längenabschnitt 7b hat eine Länge L2 und liegt an der Mantelfläche des Mantelmaterial-Zylinders 2 im Bereich der Rechteckstufe 2d an und er ist mit diesem verschweißt.

Das Anschweißende 7 des Hohlzylinders 6 ist mit der Rechteckstufe 2d über eine Länge L1a und mit der oberen Stirnseite des Mantelmaterial-Zylinders über eine Länge L1b verschweißt, die der Innendurchmesser-Erweiterung des Hohlzylinders 2 entspricht. Dadurch wird eine besonders stabile Schweißverbindung ermöglicht, und es ergibt sich eine zusätzliche Führung des Hohlzylinders 6. Die Summe der Längen L1a und L1b ergibt den Gesamtanteil L1 der Schweißkontaktfläche S mit horizontaler Orientierung.

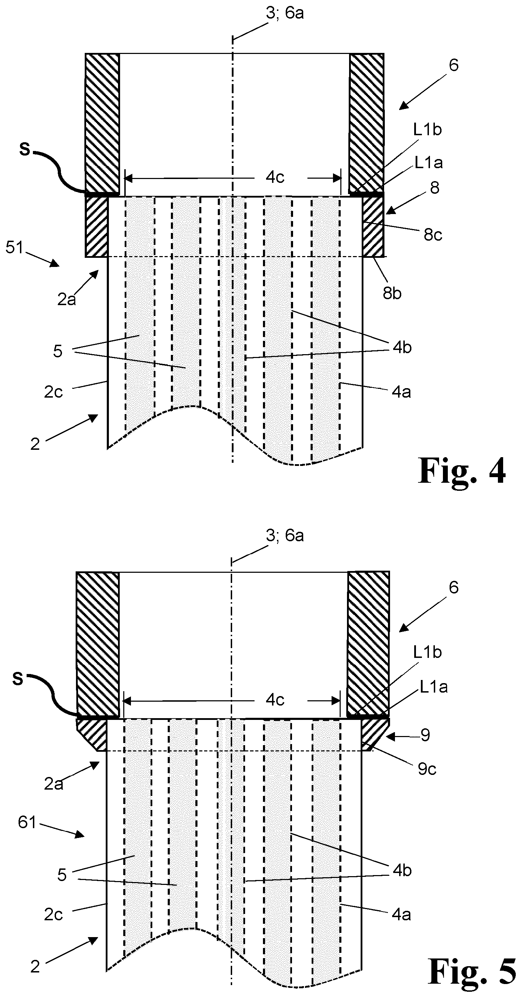

Bei der Ausführungsform der Vorform 51 von **Figur 4** ist zusätzlich zum der Hohlzylinder 6 ein Adapterteil vorgesehen. Dieses besteht aus einem umlaufenden und im Querschnitt rechteckigen Quarzglasring 8, dessen Innendurchmesser dem Außendurchmesser des Mantelmaterial-Zylinders 2 entspricht. Das Adapterteil (Quarzglasring 8) dient zur flanschartigen Erweiterung des Außendurchmessers des Mantelmaterial-Zylinders 6. Es wird zuerst mit seiner Innenmantelfläche 8c mit der Zylindermantelfläche 2c des Mantelmaterial-Zylinders 2 so verschweißt, dass die Mittelachse des Quarzglasrings und die Längsachse 6a des Mantelmaterial-Zylinders 2 koaxial verlaufen.

Der Hohlzylinder 6 hat einen Außendurchmesser, der dem des Quarzglasrings 8 entspricht und einen Innendurchmesser, der um eine Länge L1b kleiner ist als der des Quarzglasrings 8. Er wird auf den Fügeverbund von Mantelmaterial-Zylinder 2 und Quarzglasring 8 so aufgesetzt, dass die Längsachsen 3 und 6a koaxial zueinander verlaufen und mit dem Quarzglasring 8 und der oberen Stirnseite des Mantelmaterial-Zylinders 2 verschweißt. Die sich dabei bildende Schweißkontaktfläche S setzt sich aus einem äußeren Ring mit der Breite L1a und einem inneren Ring mit der Breite L1b zusammen. Dabei bezeichnet L1a die Ringbreite der Schweißverbindung zwischen dem Hohlzylinder 6 und dem Quarzglasring 8, und L1b bezeichnet die Ringbreite der Schweißverbindung zwischen dem Hohlzylinder 6 und dem Mantelmaterial-Zylinder 2. Die Summe der Längen L1a und L1b ergibt den Gesamtanteil L1 der Schweißkontaktfläche S mit horizontaler Orientierung, der 100% beträgt, wobei sich die Schweißkontaktfläche S über die gesamte Wandungsbreite des Hohlzylinders 6 erstreckt.

Diese Ausführungsform hat den Vorteil, dass weder am Hohlzylinder 6 noch am Mantelmaterial-Zylinder 2 mechanische Bearbeitungsschritte zur Erzeugung von Stufen, Schrägen und dergleichen erforderlich sind.

Alternativ und gleichermaßen bevorzugt kann der Quarzglasring 8 auch zuerst mit der unteren Stirnseite des Hohlzylinder 6 verschweißt werden und dieser Fügeverbund wird dann mit der Zylindermantelfläche 2c und der oberen Stirnseite des Mantelmaterial-Zylinders 6 verschweißt.

Im Unterschied zu Figur 4 hat der umlaufende Quarzglasring 9 bei der Ausführungsform der Vorform 61 von **Figur 5** einen Querschnitt, der im Wesentlichen einem rechtwinkeligen, gleichschenkligem Dreieck entspricht. Er wird zuerst mit seiner Innenmantelfläche 9c mit der Zylindermantelfläche 2c des Mantelmaterial-Zylinders 2 so verschweißt, dass die Mittelachse des Quarzglasrings 9 und die Längsachse 6a des Mantelmaterial-Zylinders 2 koaxial verlaufen.

Der Hohlzylinder 6 hat einen Außendurchmesser, der dem des Quarzglasrings 9 entspricht und einen Innendurchmesser, der um eine Länge L1b kleiner ist als der des Quarzglasrings 9. Er wird auf den Fügeverbund von Mantelmaterial-Zylinder 2 und Quarzglasring 9 so aufgesetzt, dass die jeweiligen Längsachsen 3 und 6a koaxial zueinander verlaufen und mit dem Quarzglasring 9 und der oberen Stirnseite des Mantelmaterial-Zylinders 2 verschweißt. Die sich dabei bildende Schweißkontaktfläche S setzt sich aus einem äußeren Ring mit der Breite L1a und einem inneren Ring mit der Breite L1b zusammen. Dabei bezeichnet L1a die Ringbreite der Schweißverbindung zwischen dem Hohlzylinder 6 und dem Quarzglasring 9, und L1b bezeichnet die Ringbreite der Schweißverbindung zwischen dem Hohlzylinder 6 und dem Mantelmaterial-Zylinder 2. Die Summe der Längen L1a und L1b ergibt den Gesamtanteil L1 der Schweißkontaktfläche S mit horizontaler Orientierung, der 100% beträgt. Auch hier erstreckt sich die Schweißkontaktfläche S über die gesamte Wandungsbreite des Hohlzylinders 6.

Auch diese Ausführungsform hat den Vorteil, dass weder am Hohlzylinder 6 noch am Mantelmaterial-Zylinder 2 mechanische Bearbeitungsschritte zur Erzeugung von Stufen, Schrägen und dergleichen erforderlich sind.

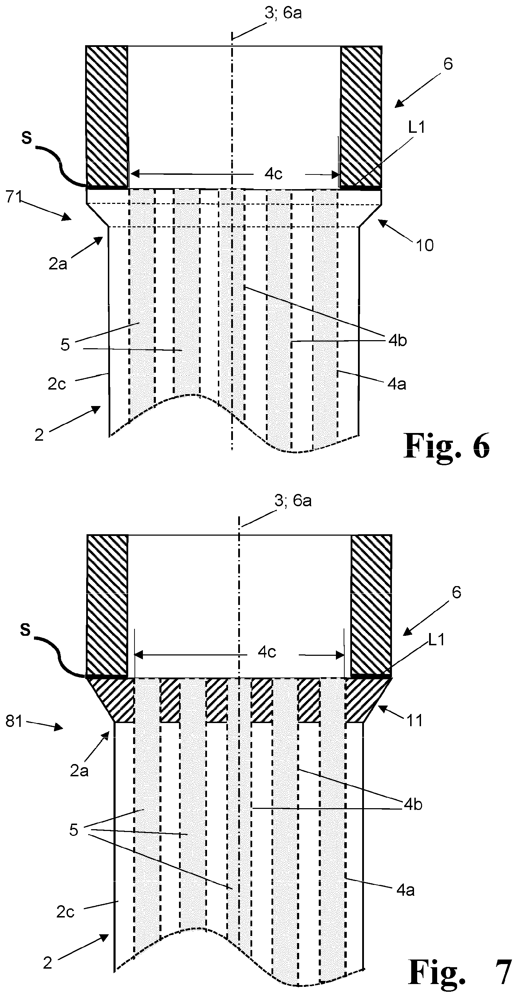

Bei der in **Figur 6** gezeigten Ausführungsform der Vorform 71 hat der Mantelmaterial-Zylinder 2 ein sich konisch nach oben erweiterndes oberes Ende 10. Ansonsten ist er zylinderförmig. Das verdickte obere Ende 10 wird beispielsweise beim Rundschleifen der Zylindermantelfläche 2 zur Einstellung des nominalen Außendurchmessers erzeugt, indem dort kein oder weniger Glasmaterial abgetragen wird. Der Hohlzylinder 6 wird mit dem oberen, verdickten Ende des Mantelmaterial-Zylinders so verschweißt, dass die jeweiligen Längsachsen 3 und 6a koaxial verlaufen. Auch hier erstreckt sich die Schweißkontaktfläche S ausschließlich horizontal und über die gesamte Wandungsbreite des Hohlzylinders 6.

Auch bei der Ausführungsform der erfindungsgemäßen Vorform 81 gemäß **Figur 7** dient ein Adapterteil zur Erweiterung des oberen Endes 2a des Mantelmaterial-Zylinders 2. Das Adapterteil liegt in Form einer Konusscheibe 11 (genauer: in Form eines Kegelstumpfes) aus undotiertem Quarzglas mit einer Dicke von 15mm vor. Ihr minimaler Durchmesser entspricht dem Außendurchmesser des Mantelmaterial-Zylinders 2, und ihr maximaler Durchmesser entsprich dem Außendurchmesser des Hohlzylinders 6. Die Konusscheibe 11 wird mit der oberen Stirnseite des Mantelmaterial-Zylinders 2 vollflächig verschweißt. Sie überdeckt daher den gesamten Lochbereich-Umkreis 4c. Die Durchgangsbohrungen 4a; 4b zur Aufnahme der Kernstäbe 5 werden daher erst nachträglich - also nach dem Verschweißen von Mantelmaterial-Zylinder 2 und Konusscheibe 11- erzeugt, wobei die Konusscheibe 11 mitsamt dem Mantelmaterial-Zylinder 2 durchbohrt wird.

Anschließend wird der Hohlzylinder auf der planen Oberseite der Konusscheibe 11 so aufgeschweißt, dass die Längsachsen 3; 6a koaxial verlaufen. Da die Konusscheibe 11 und der Hohlzylinder 6 einen maximalen Durchmesser aufweisen, der größer ist als der Außendurchmesser des Mantelmaterial-Zylinders 2, vergrößert es die für die Schweißverbindung mit dem Hohlzylinder 6 zur Verfügung stehende Kontaktierungsfläche. Die Schweißkontaktfläche S wird allein durch die unmittelbare Verbindung zwischen Hohlzylinder 6 und Konusscheibe 11 - also ohne direkten Kontakt des Hohlzylinders 6 mit dem Mantelmaterial-Zylinder 2 - erzeugt. Sie erstreckt sich ausschließlich horizontal und über die gesamte Wandungsbreite des Hohlzylinders 6.

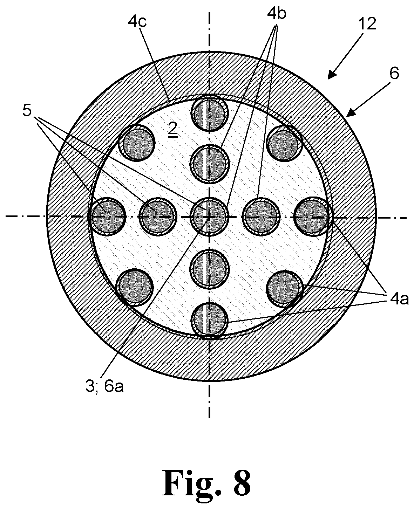

Im Unterschied der in den Figuren 1 und 2 gezeigten Ausführungsform liegt bei der Ausführungsform der Vorform 12 von **Figur 8** der minimale Innendurchmesser des Hohlzylinders 6 bei 164mm (und nicht bei 180mm) und ist somit kleiner als der Lochbereich-Umkreis 4c mit einem Durchmesser von 170mm. Demnach überdeckt der Hohlzylinder 6 - in einer Projektion auf den Basiskörper-Querschnitt - die entfernt zur Längsachse 6a liegenden Durchgangsbohrungen 4a teilweise. Dennoch ist eine Bestückung des Mantelmaterial-Zylinders 2 mit den Kernstäben 5 von oben durch die Innenbohrung des vorab angeschweißten Hohlzylinders 2 möglich, weil die Kernstäbe 5 einen Außendurchmesser haben, der kleiner ist als der Querschnitt des nicht vom Hohlzylinder 2 überdeckten Bereichs. Im Ausführungsbeispiel beträgt der Kernstab-Durchmesser 28mm, der Durchmesser der teilweise überdeckten Durchgangslöcher beträgt 33mm. Davon sind 3mm vom Hohlzylinder 2 überdeckt, so dass der freie, nicht überdeckte Querschnitt eine minimale Abmessung von 30mm hat.

Die Figuren 1 bis 8 zeigen schematisch die mit den Kernstäben bestückten Vorformen (beziehungsweise Bauteil-Ensembles aus Mantelmaterial-Zylinder und Kernstäben). Die Figuren zeigen außerdem schematisch die zur Herstellung der jeweiligen Vorformen eingesetzten Halbzeuge (Mantelmaterial-Zylinder und Halter) vor dem Einsetzen der Kernstäbe 5 in die Durchgangslöcher 4a; 4b. Die obigen Erläuterungen zu den Ausführungsbeispielen für die (primäre) Vorform und deren Verbindung mit dem Halter einschließlich der Tabellendaten gelten auch für das jeweilige Halbzeug zur Herstellung des Bauteil-Ensembles beziehungsweise der primären Vorform. Aus dem Halbzeug wird jeweils durch Einführen der Kernstäbe 5 in die Durchgangsbohrungen 4a; 4b - vorzugsweise von oben - das Bauteil-Ensemble beziehungsweise die Vorform erhalten, aus dem/aus der eine sekundäre Vorform oder direkt die Mehrkernfaser elongiert werden kann.

## Patentansprüche

1. Verfahren zur Herstellung einer Mehrkernfaser, umfassend die folgenden Verfahrensschritte:
(a) Bereitstellen eines langgestreckten, ein Glas-Mantelmaterial enthaltenden zylinderförmigen Basiskörpers (2), der ein erstes Ende (2; 2a; 10), ein zweites Ende (2b), eine Basiskörper-Längsachse (3), eine Basiskörper-Mantelfläche (2c), einen radialen Basiskörper-Querschnitt, einen nominalen Basiskörper-Außendurchmesser und mindestens zwei Durchgangslöcher (4a; 4b) aufweist, die sich entlang der Basiskörper-Längsachse (3) durch den Basiskörper (2) erstrecken,
(b) Einbringen eines ein Glas-Kernmaterial enthaltenden Kernstabs (5) in die mindestens zwei Durchgangslöcher (4a; 4b), unter Bildung eines Bauteil-Ensembles (1; 12; 31; 51; 61; 71; 81),
(c) Ziehen des Bauteil-Ensembles (1; 12; 31; 51; 61; 71; 81) zu der Mehrkernfaser oder Weiterarbeitung des Bauteil-Ensembles (1; 12; 31; 51; 61; 71; 81) zu einer Vorform, aus der die Mehrkernfaser gezogen wird, wobei das Bauteil-Ensemble (1; 12; 31; 51; 61; 71; 81) mittels eines Halters (6) aus Glas gehalten wird, der im Bereich des ersten Endes (2; 2a; 10) mit dem Basiskörper (2) unter Ausbildung einer Schweißkontaktfläche (S) verbunden ist,
wobei ein Halter (6) mit einem langgestreckten Hohlteil eingesetzt wird, das einen Hohlkanal mit einer Innenkontur aufweist, die größer ist als ein Lochbereich-Umkreis (4c), innerhalb dem die Durchgangslöcher (4a; 4b) vollständig oder mit mindestens 90% ihres Loch-Durchmessers liegen, und das eine radiale Außenabmessung aufweist, die größer ist als der Basiskörper-Außendurchmesser, **dadurch gekennzeichnet,**
**dass** die Schweißkontaktfläche (S) sowohl an der Basiskörper-Mantelfläche (2c) als auch an einer ersten, oberen Basiskörper-Stirnseite erzeugt wird,
und/oder dass ein Adapterteil (8; 9; 11) eingesetzt wird, das im Bereich des ersten Endes (2; 2a; 10) mit dem Basiskörper verbunden wird, und das eine radiale Außenabmessung aufweist, die größer ist als der Basiskörper-Außendurchmesser, wobei das Adapterteil (8; 9; 11) mit dem hohlzylinderförmigen Hohlteil (6) verschweißt wird,
oder dadurch, dass ein Basiskörper (2) mit einem sich konisch nach oben erweiternden ersten Ende (10) eingesetzt wird, das beim Rundschleifen der Basiskörper-Mantelfläche (2c) zur Einstellung des nominalen Außendurchmessers erzeugt wird, indem dort kein oder weniger Glasmaterial abgetragen wird, wobei der Hohlzylinder (6) mit dem verdickten ersten Ende (10) so verschweißt wird, dass die jeweiligen Längsachsen (3; 6a) koaxial verlaufen.

2. Verfahren nach Anspruch 1, **dadurch gekennzeichnet, dass** mindestens ein Teil der Schweißkontaktfläche (S), bevorzugt die gesamte Schweißkontaktfläche, vor dem Einbringen der Kernstäbe (5) erzeugt wird.

3. Verfahren nach Anspruch 1 oder 2, **dadurch gekennzeichnet, dass** sich die Schweißkontaktfläche (S) an der Basiskörper-Mantelfläche (2c) entlang einer Erstreckungslänge in Richtung der Basiskörper-Längsachse (3) erstreckt, wobei die Erstreckungslänge im Bereich von 5mm bis 100mm liegt, und bevorzugt mindestens 10mm, und besonders bevorzugt mindestens 20mm, beträgt.

4. Verfahren nach einem oder mehreren der vorhergehenden Ansprüche, **dadurch gekennzeichnet, dass** die Schweißkontaktfläche (S) über die Erstreckungslänge mindestens eine umlaufende Stufe (7a; 7b) und/oder mindestens eine umlaufende abgeschrägte Fase umfasst.

5. Verfahren nach einem oder mehreren der vorhergehenden Ansprüche, **dadurch gekennzeichnet, dass** ein im Wesentlichen plattenförmiges Adapterteil (11) mit der oberen Stirnseite des Basiskörpers (2) verbunden wird, wobei das plattenförmige Adapterteil (11) den Lochbereich-Umkreis (4c) mindestens teilweise überdeckt, und wobei sich mindestens ein Teil der Durchgangslöcher (4a; 4b) durch das Adapterteil (11) hindurch erstreckt.

6. Halbzeug zur Herstellung einer Mehrkernfaser, umfassend:
(i) einen ein Glas-Mantelmaterial enthaltenden zylinderförmigen Basiskörper (2), der ein erstes Ende (2; 2a; 10), ein zweites Ende (2b), eine Basiskörper-Längsachse (3), eine Basiskörper-Mantelfläche (2c), einen radialen Basiskörper-Querschnitt und einen nominalen Basiskörper-Außendurchmesser aufweist,
(ii) mindestens zwei über den Basiskörper-Querschnitt verteilte Durchgangslöcher (4a; 4b) zur Aufnahme von Kernstäben (5), die jeweils einen Loch-Durchmesser aufweisen, und die sich durch den Basiskörper (2) entlang der Basiskörper-Längsachse (3) erstrecken, und
(iii) einen Halter (6) aus Glas, der im Bereich des ersten Endes (2; 2a; 10) mit dem Basiskörper (2) unter Ausbildung einer Schweißkontaktfläche (S) verbunden ist,
wobei der Halter (2) ein langgestrecktes Hohlteil umfasst, das eine radiale Außenabmessung aufweist, die größer ist als der Basiskörper-Außendurchmesser und das eine Innenabmessung aufweist, die größer ist als ein Lochbereich-Umkreis (4c), innerhalb dem die Durchgangslöcher (4a; 4b) vollständig oder mit mindestens 90% ihres Loch-Durchmessers liegen, **dadurch gekennzeichnet,**
**dass** die Schweißkontaktfläche (S) sowohl an der Basiskörper-Mantelfläche (2c) als auch an einer ersten, oberen Basiskörper-Stirnseite ausgebildet ist,
und/oder dass ein Adapterteil (8; 9; 11) im Bereich des ersten Basiskörper-Endes (2; 2a; 10) mit dem Basiskörper (2) verbunden ist, das eine radiale Außenabmessung aufweist, die größer ist als der Basiskörper-Außendurchmesser, wobei das Adapterteil (8; 9; 11) mit dem hohlzylinderförmigen Hohlteil (6) verschweißt ist,
oder dadurch, dass der Basiskörper (2) ein sich konisch nach oben erweiterndes erstes Ende (10) aufweist, wobei der Hohlzylinder (6) mit dem verdickten ersten Ende (10) des Basiskörpers (2) so verschweißt ist, dass die jeweiligen Längsachsen (3; 6a) koaxial verlaufen.

7. Halbzeug nach Anspruch 6, **dadurch gekennzeichnet, dass** mindestens ein Teil der Schweißkontaktfläche (S) an der Basiskörper-Mantelfläche (2c) ausgebildet ist.

8. Halbzeug nach Anspruch 6 oder 7, **dadurch gekennzeichnet, dass** sich die Schweißkontaktfläche (S) um die Basiskörper-Mantelfläche (2c) entlang einer Erstreckungslänge in Richtung der Basiskörper-Längsachse (3) erstreckt, wobei die Erstreckungslänge im Bereich von 5mm bis 100 mm liegt, und bevorzugt mindestens 10mm, und besonders bevorzugt mindestens 20mm beträgt.

9. Halbzeug nach Anspruch 8, **dadurch gekennzeichnet, dass** die Schweißkontaktfläche (S) über die Erstreckungslänge mindestens eine umlaufende Stufe (7a; 7b) und/oder mindestens eine umlaufende abgeschrägte Fase umfasst.

10. Halbzeug nach einem oder mehreren der Ansprüche 6 bis 9, **dadurch gekennzeichnet, dass** ein im Wesentlichen plattenförmiges Adapterteil (11) mit der oberen Stirnseite des Basiskörpers (2) verbunden ist, wobei das plattenförmige Adapterteil den (11) Lochbereich-Umkreis (4c) mindestens teilweise überdeckt, und wobei sich mindestens ein Teil der Durchgangslöcher (4a; 4b) durch das Adapterteil (11) hindurch erstreckt.

## Claims

1. A method for fabricating a multicore fiber, comprising the following method steps:
(a) providing an elongate cylindrical main body (2) containing a glass cladding material and comprising a first end (2; 2a; 10), a second end (2b), a main body longitudinal axis (3), a main body lateral surface (2c), a radial main body cross-section, a nominal main body outer diameter and at least two through-holes (4a; 4b) which extend along the main body longitudinal axis (3) through the main body (2),
(b) inserting a core rod (5) containing a glass core material into the at least two through-holes (4a; 4b), thereby forming a component ensemble (1; 12; 31; 51; 61; 71; 81),
(c) drawing the component ensemble (1; 12; 31; 51; 61; 71; 81) to form the multicore fiber or processing the component ensemble (1; 12; 31; 51; 61; 71; 81) further to form a preform from which the multicore fiber is drawn, the component ensemble (1; 12; 31; 51; 61; 71; 81) being held by means of a holder (6) made of glass which is connected to the main body (2) in the region of the first end (2; 2a; 10) so as to form a welding contact surface (S),
a holder (6) comprising an elongate hollow part being used, which hollow part comprises a hollow channel with an inner contour which is greater than a circumference (4c) of the hole region within which the through-holes (4a; 4b) lie completely or with at least 90% of their hole diameter, and which hollow part has a radial outer dimension which is greater than the main body outer diameter, **characterized**
**in that** the welding contact surface (S) is produced both on the main body lateral surface (2c) and on a first, upper main body end face,
**and/or in that** an adapter part (8; 9; 11) is used which is connected to the main body in the region of the first end (2; 2a; 10), and which has a radial outer dimension which is greater than the main body outer diameter, the adapter part (8; 9; 11) being welded to the hollow-cylindrical hollow part (6),
**or in that** a main body (2) comprising a first end (10) that expands conically upward is used, which end is produced during the cylindrical grinding of the main body lateral surface (2c) to adjust the nominal outer diameter by removing no or less glass material there, the hollow cylinder (6) being welded to the thickened first end (10) such that the respective longitudinal axes (3; 6a) run coaxially.

2. The method according to claim 1, **characterized in that** at least a part of the welding contact surface (S), preferably the entire welding contact surface, is produced before the core rods (5) are inserted.

3. The method according to claim 1 or 2, **characterized in that** the welding contact surface (S) extends on the main body lateral surface (2c) along an extension length in the direction of the main body longitudinal axis (3), the extension length being in the range of 5 mm to 100 mm, and preferably at least 10 mm, and particularly preferably at least 20 mm.

4. The method according to one or more of the preceding claims, **characterized in that** the welding contact surface (S) comprises at least one circumferential step (7a; 7b) and/or at least one circumferential bevel over the extension length.

5. The method according to one or more of the preceding claims, **characterized in that** a substantially plate-like adapter part (11) is connected to the upper end face of the main body (2), the plate-like adapter part (11) at least partially covering the circumference (4c) of the hole region, and at least a part of the through-holes (4a; 4b) extending through the adapter part (11).

6. A semifinished product for fabricating a multicore fiber, comprising:
(i) a cylindrical main body (2) containing a glass cladding material and comprising a first end (2; 2a; 10), a second end (2b), a main body longitudinal axis (3), a main body lateral surface (2c), a radial main body cross-section, and a nominal main body outer diameter,
(ii) at least two through-holes (4a; 4b) distributed over the main body cross-section for receiving core rods (5), which through-holes each have a hole diameter and extend through the main body (2) along the main body longitudinal axis (3), and
(iii) a holder (6) made of glass, which is connected to the main body (2) in the region of the first end (2; 2a; 10) so as to form a welding contact surface (S),
the holder (2) comprising an elongate hollow part which has a radial outer dimension which is greater than the main body outer diameter, and which has an inner dimension which is greater than a circumference (4c) of the hole region within which the through-holes (4a; 4b) lie completely or with at least 90% of their hole diameter, **characterized in that** the welding contact surface (S) is formed both on the main body lateral surface (2c) and on a first, upper main body end face,
**and/or in that** an adapter part (8; 9; 11) is connected to the main body (2) in the region of the first main body end (2; 2a; 10), which adapter part has a radial outer dimension which is greater than the main body outer diameter, the adapter part (8; 9; 11) being welded to the hollow-cylindrical hollow part (6),
**or in that** the main body (2) comprises a first end (10) that expands conically upward, the hollow cylinder (6) being welded to the thickened first end (10) of the main body (2) such that the respective longitudinal axes (3; 6a) run coaxially.

7. The semifinished product according to claim 6, **characterized in that** at least a part of the welding contact surface (S) is formed on the main body lateral surface (2c).

8. The semifinished product according to claim 6 or 7, **characterized in that** the welding contact surface (S) extends around the main body lateral surface (2c) along an extension length in the direction of the main body longitudinal axis (3), the extension length being in the range of 5 mm to 100 mm, and preferably at least 10 mm, and particularly preferably at least 20 mm.

9. The semifinished product according to claim 8, **characterized in that** the welding contact surface (S) comprises at least one circumferential step (7a; 7b) and/or at least one circumferential bevel over the extension length.

10. The semifinished product according to one or more of claims 6 to 9,
**characterized in that** a substantially plate-like adapter part (11) is connected to the upper end face of the main body (2), the plate-like adapter part (11) at least partially covering the circumference (4c) of the hole region, and at least a part of the through-holes (4a; 4b) extending through the adapter part (11).

## Revendications

1. Procédé pour la fabrication d'une fibre multicœur, comprenant les étapes de procédé suivantes :
(a) fourniture d'un corps de base (2) cylindrique allongé contenant un matériau enveloppant en verre, lequel corps de base présente une première extrémité (2 ; 2a ; 10), une seconde extrémité (2b), un axe longitudinal de corps de base (3), une surface enveloppante de corps de base (2c), une section transversale radiale de corps de base, un diamètre extérieur nominal de corps de base et au moins deux trous traversants (4a ; 4b) qui s'étendent à travers le corps de base (2) le long de l'axe longitudinal de corps de base (3),
(b) introduction d'une tige de cœur (5) contenant un matériau de cœur en verre dans les au moins deux trous traversants (4a ; 4b), en formant un ensemble de composants (1 ; 12 ; 31 ; 51 ; 61 ; 71 ; 81),
(c) étirage de l'ensemble de composants (1 ; 12 ; 31 ; 51 ; 61 ; 71 ; 81) pour former la fibre multicœur ou traitement ultérieur de l'ensemble de composants (1 ; 12 ; 31 ; 51 ; 61 ; 71 ; 81) pour former une préforme à partir de laquelle la fibre multicœur est étirée, dans lequel l'ensemble de composants (1 ; 12 ; 31 ; 51 ; 61 ; 71 ; 81) est maintenu au moyen d'un support (6) en verre qui est relié au corps de base (2) dans la zone de la première extrémité (2 ; 2a ; 10) en formant une surface de contact de soudage (S),
dans lequel un support (6) comportant une partie creuse allongée est utilisé, lequel présente un canal creux comportant un contour intérieur qui est plus grand qu'un périmètre de zone de trous (4c) à l'intérieur duquel les trous traversants (4a ; 4b) se trouvent complètement ou avec au moins 90 % de leur diamètre de trou, et lequel présente une dimension extérieure radiale qui est plus grande que le diamètre extérieur de corps de base, **caractérisé en ce**
**que** la surface de contact de soudage (S) est produite aussi bien sur la surface enveloppante de corps de base (2c) que sur une première face frontale supérieure de corps de base,
**et/ou qu**'une partie d'adaptation (8 ; 9 ; 11) est utilisée, laquelle est reliée au corps de base dans la zone de la première extrémité (2 ; 2a ; 10) et présente une dimension extérieure radiale qui est plus grande que le diamètre extérieur de corps de base, dans lequel la partie d'adaptation (8 ; 9 ; 11) est soudée à la partie creuse (6) en forme de cylindre creux,
**ou qu**'un corps de base (2) comportant une première extrémité (10) s'élargissant de manière conique vers le haut est utilisé, lequel est produit lors du meulage circulaire de la surface enveloppante de corps de base (2c) pour régler le diamètre extérieur nominal en n'enlevant pas, ou moins, de matériau en verre à cet endroit, dans lequel le cylindre creux (6) est soudé à la première extrémité (10) épaissie de telle sorte que les axes longitudinaux (3 ; 6a) respectifs s'étendent de manière coaxiale.

2. Procédé selon la revendication 1, **caractérisé en ce qu'**au moins une partie de la surface de contact de soudage (S), de préférence la totalité de la surface de contact de soudage, est produite avant l'introduction des tiges de cœur (5).

3. Procédé selon la revendication 1 ou 2, **caractérisé en ce que** la surface de contact de soudage (S) s'étend sur la surface enveloppante de corps de base (2c) le long d'une longueur d'extension dans la direction de l'axe longitudinal de corps de base (3), dans lequel la longueur d'extension se trouve dans la plage allant de 5 mm à 100 mm, et est de préférence d'au moins 10 mm, et de manière particulièrement préférée d'au moins 20 mm.

4. Procédé selon l'une ou plusieurs des revendications précédentes, **caractérisé en ce que** la surface de contact de soudage (S) comprend, sur la longueur d'extension, au moins un gradin (7a ; 7b) périphérique et/ou au moins un chanfrein périphérique biseauté.

5. Procédé selon l'une ou plusieurs des revendications précédentes, **caractérisé en ce qu'**une partie d'adaptation (11) sensiblement en forme de plaque est reliée à la face frontale supérieure du corps de base (2), dans lequel la partie d'adaptation (11) en forme de plaque recouvre au moins partiellement le périmètre de zone de trous (4c), et dans lequel au moins une partie des trous traversants (4a ; 4b) s'étend à travers la partie d'adaptation (11).

6. Produit semi-fini pour la fabrication d'une fibre multicœur, comprenant :
(i) un corps de base (2) cylindrique contenant un matériau enveloppant en verre, lequel corps de base présente une première extrémité (2 ; 2a ; 10), une seconde extrémité (2b), un axe longitudinal de corps de base (3), une surface enveloppante de corps de base (2c), une section transversale radiale de corps de base et un diamètre extérieur nominal de corps de base,
(ii) au moins deux trous traversants (4a ; 4b) répartis sur la section transversale de corps de base et destinés à recevoir des tiges de cœur (5), lesquels trous traversants présentent respectivement un diamètre de trou et s'étendent à travers le corps de base (2) le long de l'axe longitudinal de corps de base (3), et
(iii) un support (6) en verre qui est relié au corps de base (2) dans la zone de la première extrémité (2 ; 2a ; 10) en formant une surface de contact de soudage (S),
dans lequel le support (2) comprend une partie creuse allongée qui présente une dimension extérieure radiale qui est plus grande que le diamètre extérieur de corps de base et qui présente une dimension intérieure qui est plus grande qu'un périmètre de zone de trous (4c), à l'intérieur duquel les trous traversants (4a ; 4b) se trouvent entièrement ou avec au moins 90 % de leur diamètre de trou, **caractérisé en ce**
**que** la surface de contact de soudage (S) est réalisée aussi bien sur la surface enveloppante de corps de base (2c) que sur une première face frontale supérieure de corps de base,
**et/ou qu'**une partie d'adaptation (8 ; 9 ; 11) est reliée au corps de base (2) dans la zone de la première extrémité de corps de base (2 ; 2a ; 10), laquelle partie d'adaptation présente une dimension extérieure radiale qui est plus grande que le diamètre extérieur de corps de base, dans lequel la partie d'adaptation (8 ; 9 ; 11) est soudée à la partie creuse (6) en forme de cylindre creux,
ou que le corps de base (2) présente une première extrémité (10) s'élargissant de manière conique vers le haut, dans lequel le cylindre creux (6) est soudé à la première extrémité (10) épaissie du corps de base (2) de telle sorte que les axes longitudinaux (3 ; 6a) respectifs s'étendent de manière coaxiale.

7. Produit semi-fini selon la revendication 6, **caractérisé en ce qu'**au moins une partie de la surface de contact de soudage (S) est réalisée sur la surface enveloppante de corps de base (2c).

8. Produit semi-fini selon la revendication 6 ou 7, **caractérisé en ce que** la surface de contact de soudage (S) s'étend autour de la surface enveloppante de corps de base (2c) le long d'une longueur d'extension dans la direction de l'axe longitudinal de corps de base (3), dans lequel la longueur d'extension se trouve dans la plage allant de 5 mm à 100 mm, et est de préférence d'au moins 10 mm, et de manière particulièrement préférée d'au moins 20 mm.

9. Produit semi-fini selon la revendication 8, **caractérisé en ce que** la surface de contact de soudage (S) comprend sur la longueur d'extension au moins un gradin (7a ; 7b) périphérique et/ou au moins un chanfrein périphérique biseauté.

10. Produit semi-fini selon l'une ou plusieurs des revendications 6 à 9, **caractérisé en ce qu'**une partie d'adaptation (11) sensiblement en forme de plaque est reliée à la face frontale supérieure du corps de base (2), dans lequel la partie d'adaptation (11) en forme de plaque recouvre au moins partiellement le périmètre de zone de trous (4c), et dans lequel au moins une partie des trous traversants (4a ; 4b) s'étend à travers la partie d'adaptation (11).
